(19) Europäisches Patentamt
European Patent Office
Office européen des brevets

(11) EP 0 792 308 B1

(12) # EUROPÄISCHE PATENTSCHRIFT

(45) Veröffentlichungstag und Bekanntmachung des Hinweises auf die Patenterteilung:
**09.12.1998 Patentblatt 1998/50**

(21) Anmeldenummer: **95938426.4**

(22) Anmeldetag: **06.11.1995**

(51) Int Cl.[6]: **C08G 61/08**, B32B 27/32

(86) Internationale Anmeldenummer:
**PCT/EP95/04363**

(87) Internationale Veröffentlichungsnummer:
**WO 96/16104 (30.05.1996 Gazette 1996/25)**

(54) **VERFAHREN ZUR POLYMERISATION VON CYCLISCHEN OLEFINEN UND PHOTOPOLYMERISIERBARE ZUSAMMENSETZUNG**

PROCESS FOR POLYMERISING CYCLIC OLEFINS AND A PHOTOPOLYMERISABLE COMPOSITION

PROCEDE POUR LA POLYMERISATION D'OLEFINES CYCLIQUES ET COMPOSITION PHOTOPOLYMERISABLE

(84) Benannte Vertragsstaaten:
**BE CH DE ES FR GB IT LI NL SE**

(30) Priorität: **17.11.1994 CH 3461/94**

(43) Veröffentlichungstag der Anmeldung:
**03.09.1997 Patentblatt 1997/36**

(73) Patentinhaber: **Ciba Specialty Chemicals Holding Inc.**
**4057 Basel (CH)**

(72) Erfinder:
- **VAN DER SCHAAF, Paul, Adriaan**
  **CH-1700 Fribourg (CH)**
- **HAFNER, Andreas**
  **CH-3177 Laupen (CH)**
- **MÜHLEBACH, Andreas**
  **CH-1782 Belfaux (CH)**

(56) Entgegenhaltungen:
**EP-A- 0 407 870**
**WO-A-95/01388**
**US-A- 4 060 468**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 792 308 B1

**Beschreibung**

Die vorliegende Erfindung betrifft ein Verfahren zur Polymerisation cyclischer Olefine durch photochemische Ringöffnungs-Metathese-Polymerisation unter Verwendung katalytischer Mengen eines Niob- oder Tantalkatalysators, der mindestens zwei Methylgruppen oder zwei monosubstituierte Methylgruppen ohne $\alpha$-Wasserstoffatome im Substituenten am Metall gebunden enthält, sowie Zusammensetzungen enthaltend diese Olefine zusammen mit einer katalytischen Menge dieses Katalysators.

Die thermisch induzierte Ringöffnungs-Metathese-Polymerisation unter Verwendung katalytischer Mengen von Metallkatalysatoren ist schon seit längerem bekannt und vielfach in der Literatur beschrieben [siehe zum Beispiel Ivin, K.J., Olefin Metathesis 1-12, Academic Press, London (1983)]. So herstellbare Polymere werden industriell hergestellt und sind kommerziell erhältlich. Dagegen ist zur photochemisch induzierten Ringöffnungs-Metathese-Polymerisation nur wenig bekannt geworden und kommerzielle Anwendungen haben sich bis heute nicht ergeben.

Aus US-A-4,060,468 ist bekannt, eine Olefin-Metathese-Polymerisation in der Weise durchzuführen, dass man eine Zweikomponentenmischung aus einem Metallsalz ausgewählt aus Wolfram-, Molybdän-, Rhenium- und Tantalsalzen und einem substituierten Phenol oder Benzylalkohol als Cokatalysatoren in ein Reaktionsgefäß mit dem monomeren Olefin gibt und anschließend die gesamte Reaktionsmischung mit UV-Licht bestrahlt. Als Olefine werden nur cyclische und acyclische Kohlenwasserstoffe ohne funktionelle Gruppen beziehungsweise Substituenten erwähnt. Die getrennte Lagerung der Katalysatorkomponenten und der Verfahrensschritt des Mischens der Katalysatorkomponenten direkt vor der eigentlichen Reaktion machen das bekannte Verfahren technisch aufwendig und umständlich.

Tanielan, C., Kieffer, R., Harfouch, A., Tetrahedron Letters 52:4589-4592 (1977) beschreiben das Katalysatorsystem $W(CO)_6/CCl_4$, das nach der Bestrahlung mit UV-Licht für die Metathesepolymerisation von Cyclopenten und Norbornen eingesetzt werden kann. Metallcarbonyle sind flüchtig und toxisch, so dass deren Verwendung aus physiologischen Gründen aufwendige Schutzmassnahmen erforderlich macht. Zudem beobachtet man als Konkurrenzreaktion eine radikalische Additionsreaktion unter Bildung monomerer 1-Chlor-2-trichlormethyl-cycloalkanen.

Aus Thoi, H.H., Ivin, K.J., Rooney, J.J., J. Mol. Catal. 15:245-270(1982) ist bekannt, daß ein Wolframpentacarbonylcarbenkomplex der Formel

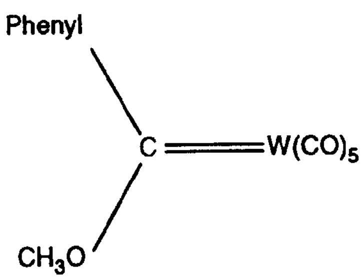

ein thermischer Katalysator für die ringöffnende Metathesepolymerisation von Dimethylnorbornen ist, und zusammen mit Phenylacetylen als Cokatalysator auch ein Photokatalysatorsystem für die gleiche Polymerisation darstellt. Dieses Katalysatorsystem hat den schwerwiegenden Nachteil, daß es als gebrauchsfertige Formulierung nur eine geringe Lagerstabilität aufweist, die Carbonylverbindung physiologisch bedenklich ist und die Toleranz gegenüber fuktionellen Gruppen in Cycloolefinen zu gering ist.

Feldmann, C., et al., in: Stephen J. Lippard (Ed.) Progress in Inorganic Chemistry, 39:3-73 (1991) beschreiben Molybdän- und Wolframalkylidenkomplexe, die alleine nur schwache, aber zusammen mit Lewis-Säuren wirksame thermische Katalysatoren für die Polymerisation von Cycloolefinen sind.

Die bekannten photochemisch aktivierbaren Katalysatoren benötigen also stets einen Cokatalysator, wodurch die Qualität der hergestellten Polymere bedingt durch die gewählte Art und Reihenfolge der Reagenzien stark schwanken kann.

Mit den bekannten Verfahren lassen sich Polymere aus cyclischen Olefinen durch photochemische Ringöffnungs-Metathese-Polymerisation nur mit hohem Aufwand und in wirtschaftlich unbefriedigender Weise herstellen. Als besondere Nachteile werden die mangelnde Lagerstabilität, die ein Mischen der Komponenten erst direkt vor der Herstellung zulässt, die mangelnde Toleranz gegenüber funktionalisierten cyclischen Olefinen sowie die Notwendigkeit der Verwendung von zwei Komponenten als Katalysatorsystem empfunden. Es besteht daher ein Bedürfnis, ein vom technischen, wirtschaftlichen und ökologischen Gesichtspunkt aus verbessertes und allgemein brauchbares Verfahren zur Herstellung von Polymeren aus cyclischen Olefinen durch photochemische Ringöffnungs-Metathese-Polymerisation bereitzustellen.

In der WO-A-93/13171 werden luft- und wasserstabile Einkomponenten- und Zweikomponenten-Katalysatoren auf der Basis von Carbonylgruppen enthaltenden Molybdän- und Wolframverbindungen sowie Ruthenium- und Osmiumverbindungen mit mindestens einem Polyenliganden für die thermische Metathesepolymerisation und eine photoaktivierte Metathesepolymerisation von gespannten Cycloolefinen, besonders Norbornen und Norbornenderivaten, beschrieben. Andere polycyclische - vor allen Dingen nicht-kondensierte polycyclische Cycloolefine werden nicht erwähnt. Die verwendeten Einkomponenten-Katalysatoren der Rutheniumverbindungen, nämlich $[(C_6H_6)Ru(CH_3CN)_2Cl]^+PF_6^-$ und $[Ru(Cumen)Cl_2]_2$ können zwar durch UV-Bestrahlung aktiviert werden; die Lagerstabilität der Zusammensetzungen mit Norbornen sind jedoch völlig unzureichend. Diese Katalysatoren vermögen die bekannten Zweikomponenten-Katalysatoren nur unzureichend zu ersetzen.

Petasis, N. A., Fu, D., J. Am. Chem. Soc. 115:7208-7214 (1993) beschreiben die thermische ringöffnende Metathesepolymerisation von Norbornen unter Verwendung von Biscyclopentadienyl-bis(trimethylsilyl)methyl-titan(IV) als thermisch aktiven Katalysator. Eine photochemische Aktivität ist nicht erwähnt.

Es wurde gefunden, daß Zusammensetzungen aus gespannten Cycloolefinen und einem Einkomponentenkatalysator photochemisch polymerisierbar sind, wenn die Zusammensetzung eine Niob(V)- oder Tantal(V)verbindung enthält, in der mindestens zwei gegebenenfalls substituierte Alkylgruppen am Metall gebunden sind, wobei der Substituent kein Wasserstoffatom in $\alpha$-Stellung enthält. Überraschend haben sich diese thermisch stabilen Verbindungen als wirksame Katalysatoren für die photoinduzierte Ringöffnungs-Metathese-Polymerisation erwiesen, wobei trotz der photochemischen Reaktivität die Lagerstabilität von Mischungen aus Cycloolefinen und den Niob- oder Tantalverbindungen erhalten bleibt.

Es wurde ferner überraschend gefunden, dass die genannten Katalysatoren schon nach einer kurzen Bestrahlung in Gegenwart von Cycloolefinen als thermische Katalysatoren wirken, so dass die photochemische und thermische Polymerisation in Kombination angewendet werden können.

Ein Gegenstand der vorliegenden Erfindung ist ein Verfahren zur photokatalytischen Polymerisation eines cyclischen Olefins oder mindestens zwei verschiedener cyclischer Olefine in Gegenwart einer Metallverbindung als Katalysator, das dadurch gekennzeichnet ist, dass man eine photochemische Ringöffnungs-Metathese-Polymerisation in Gegenwart einer katalytischen Menge mindestens einer thermostabilen Niob(V)- oder Tantal(V)verbindung durchführt, die mindestens zwei Methylgruppen oder zwei monosubstituierte Methylgruppen am Metall gebunden enthält, wobei der Substituent kein Wasserstoffatom in $\alpha$-Stellung enthält.

Die übrigen Valenzen des Niob- und Tantalatoms sind bevorzugt mit thermostabilen Neutralliganden abgesättigt, die in grosser Vielzahl bekannt sind. Die Zahl der Neutralliganden kann auch die stöchiometrisch mögliche Zahl überschreiten (Solvate).

Bei den cyclischen Olefinen kann es sich um monocyclische oder polycyclische kondensierte und/oder überbrückte Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pyrimidinylen enthalten können. Die einzelnen cyclischen Ringe können 3 bis 16, bevorzugt 3 bis 12 und besonders bevorzugt 3 bis 8 Ringglieder enthalten. Die cyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität und die Thermostabilität der Niob- und Tantalverbindungen nicht beeinträchtigen. Bei den Cycloolefinen handelt es sich um gespannte Ringe beziehungsweise Ringsysteme.

Thermostabilität bedeutet im Rahmen der Erfindung, dass die photokatalytisch aktiven Niob(V)- oder Tantal(V) verbindungen unter Erwärmen keine aktiven Spezies für die Ringöffnungs-Metathese-Polymerisation bilden. Der Katalysator kann zum Beispiel bei Raumtemperatur bis leicht erhöhter Temperatur wie etwa + 40°C innerhalb von Wochen unter Lichtausschluß keine Ringöffnungs-Metathese-Polymerisation initiieren. Während dieser Zeit wird nur eine unbedeutende Menge an Monomer (weniger als 0,2 Gew.-%) umgesetzt. Die Thermostabilität kann zum Beispiel bestimmt werden, indem man eine Toluol-Lösung mit 20 Gew.-% Monomer und 0,33 Gew.-% Niob(V)- oder Tantal(V)-katalysator bei 50°C 96 Stunden in der Dunkelheit lagert und eine eventuell gebildete Polymermenge, erkennbar am Viskositätsaufbau und durch Ausfällen in einem Fällungsmittel, beispielsweise Ethanol, Filtration und Trocknen quantitativ bestimmbar, nicht mehr als 0,5 Gew.-% und bevorzugt nicht mehr als 0,2 Gew.-% beträgt.

Wenn die cyclischen Olefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

In einer bevorzugten Ausführungsform des erfindungsgemässen Verfahrens entsprechen die Cycloolefine der Formel I

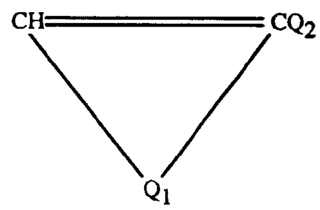

(I),

worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroarakyl oder $R_4$-X- substituiert ist; oder bei dem zwei benachbarte C-Atome mit -CO-O-CO- oder $-CO-NR_5-CO-$ substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder $-C(O)-NR_{12}-$ ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

Ist in den Verbindungen der Formel I ein asymmetrisches Zentrum vorhanden, so hat dies zur Folge, daß die Verbindungen in optisch isomeren Formen auftreten können. Einige Verbindungen der Formel I können in tautomeren

Formen (z.B. Keto-Enol-Tautomerie) vorkommen. Liegt eine aliphatische C=C-Doppelbindung vor, so kann auch geometrische Isomerie (E-Form oder Z-Form) auftreten. Ferner sind auch Exo-Endo-Konfigurationen möglich. Die Formel I umfaßt somit alle möglichen Stereoisomeren, die in Form von Enantiomeren, Tautomeren, Diastereomeren, E/Z-Isomeren oder deren Gemische vorliegen.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sek-Butyl, tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel der Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl, n-Octadec-4-enyl.

Beim Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-Propyl, 2-Cyano-n-Butyl, 1-Cyano-iso-Butyl, 1-Cyano-sek-Butyl, 1-Cyano-tert-Butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, $\alpha$-Methylbenzyl, Phenbutyl oder $\alpha,\alpha$-Dimethylbenzyl handeln.

Aryl enthält bevorzugt 6 bis 10 C-Atome. Es kann sich beispielsweise um Phenyl, Pentalin, Inden, Naphthalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, 1-Butyloxy, sek.-Butyloxy und t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen, Fluor, Chlor, Brom und Jod vorzugsweise Fluor, Chlor und Brom zu verstehen.

Für das erfindungsgemäße Verfahren besonders gut geeignete Verbindungen der Formel I sind jene, worin $Q_2$ Wasserstoff bedeutet.

Ferner sind für die Polymerisation Verbindungen der Formel I bevorzugt, worin der alicyclische Ring, den $Q_1$ zusammen mit der $-CH=CQ_2-$ Gruppe bildet, 3 bis 16, bevorzugter 3 bis 12 und besonders bevorzugt 3 bis 8 Ringatome aufweist, und wobei es sich um ein monocyclisches, bicyclischen, tricyclisches oder tetracyclisches Ringsystem handeln kann.

Mit besonderem Vorteil läßt sich das erfindungsgemäße Verfahren mit denjenigen Verbindungen der Formel I durchführen, worin

$Q_1$ ein Rest mit mindestens einem Kohlenstoffatom ist, der zusammen mit der $-CH=CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_4$-X- substituiert ist; oder bei dem zwei benachbarte C-Atome in diesem Rest $Q_1$ mit -CO-O-CO- oder -CO-$NR_5$-CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, -C(O)-$NR_5$-, -$NR_{10}$-C(O)-, $-SO_2$-O- oder -O-$SO_2$- stehen;

$R_1$, $R_2$ und $R_3$ unabhängig voneinander $C_1$-$C_6$-Alkyl, $C_1$-$C_6$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten;

$R_5$ und $R_{10}$ unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind;

$R_6$, $R_7$ und $R_8$ unabhängig voneinander $C_1$-$C_6$-Alkyl, $C_1$-$C_6$-Perfluoralkyl, Phenyl oder Benzyl darstellen;

u für 0 oder 1 steht;

wobei der mit $Q_1$ gebildete alicyclische Ring gegebenenfalls weitere nichtaromatische Doppelbindungen enthält;

$Q_2$ Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet;

$R_{11}$ $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt;

$X_2$ -C(O)-O- oder -C(O)-$NR_{12}$- ist; und

$R_{12}$ Wasserstoff, $C_1$-$C_6$-Alkyl, Phenyl oder Benzyl bedeutet;

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, $-NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_6$-Alkyl, Phenyl oder Benzyl bedeutet.

Aus dieser Gruppe sind diejenigen Verbindungen der Formel I bevorzugt, worin

$Q_1$ ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, $-NO_2$, $R_1R_2R_3Si-$, -COOM, $-SO_3M$, $-PO_3M$, $-COO(M_1)_{1/2}$, $-SO_3(M_1)_{1/2}$, $-PO(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$- substituiert ist;

$R_1$, $R_2$ und $R_3$ unabhängig voneinander $C_1$-$C_4$-Alkyl, $C_1$-$C_4$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten;

X und $X_1$ unabhängig voneinander für -O-, -S-, -CO-, -SO- oder $-SO_2-$ stehen;

$R_6$, $R_7$ und $R_8$ unabhängig voneinander $C_1$-$C_4$-Alkyl, $C_1$-$C_4$-Perfluoralkyl, Phenyl oder Benzyl darstellen;

und $Q_2$ Wasserstoff bedeutet.

Insbesondere eignet sich das erfindungsgemäße Verfahren zur Polymerisation von Norbornen und Norbornenderivaten. Von diesen Norbornenderivaten sind diejenigen besonders bevorzugt, die entweder der Formel II

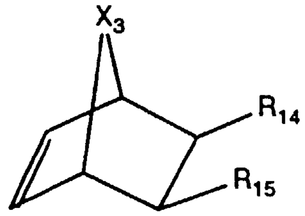

(II),

worin

$X_3$ -$CHR_{16}$-, Sauerstoff oder Schwefel;
$R_{14}$ und $R_{15}$ unabhängig voneinander Wasserstoff, -CN, Trifluormethyl, $(CH_3)_3Si$-O-, $(CH_3)_3Si$- oder -$COOR_{17}$; und
$R_{16}$ und $R_{17}$ unabhängig voneinander Wasserstoff, $C_1$-$C_{12}$-Alkyl, Phenyl oder Benzyl bedeuten;

oder der Formel III

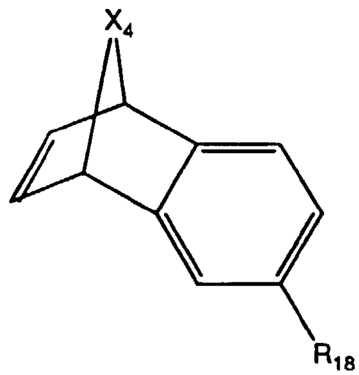

(III)

worin

$X_4$ -$CHR_{19}$-, Sauerstoff oder Schwefel;
$R_{19}$ Wasserstoff, $C_1$-$C_{12}$-Alkyl, Phenyl oder Benzyl; und
$R_{18}$ Wasserstoff, $C_1$-$C_6$-Alkyl oder Halogen bedeuten;

oder der Formel IV

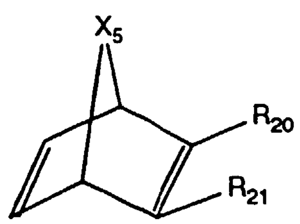

(IV),

worin

$X_5$ -$CHR_{22}$-, Sauerstoff oder Schwefel;
$R_{22}$ Wasserstoff, $C_1$-$C_{12}$-Alkyl, Phenyl oder Benzyl;
$R_{20}$ und $R_{21}$ unabhängig voneinander Wasserstoff, CN, Trifluormethyl, $(CH_3)_3Si$-O-, $(CH_3)_3Si$- oder -$COOR_{23}$; und

$R_{23}$ Wasserstoff, $C_1$-$C_{12}$-Alkyl, Phenyl oder Benzyl bedeuten;

oder der Formel V entsprechen,

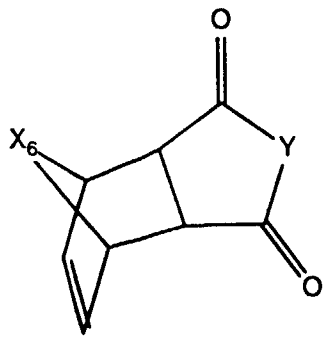

(V),

worin

$X_6$ $-CHR_{24}-$, Sauerstoff oder Schwefel;
$R_{24}$ Wasserstoff, $C_1$-$C_{12}$-Alkyl, Phenyl oder Benzyl;
Y Sauerstoff oder $>N-R_{25}$; und
$R_{25}$ Wasserstoff, Methyl, Ethyl oder Phenyl bedeuten.

Folgende Verbindungen der Formel I sind für das erfindungsgemäße Polymerisationsverfahren besonders gut geeignet, wobei bi- und polycyclische Systeme durch Diels-Alder-Reaktionen zugänglich sind:

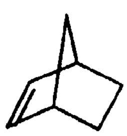 (1), 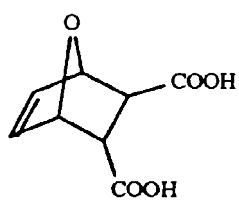 (2), 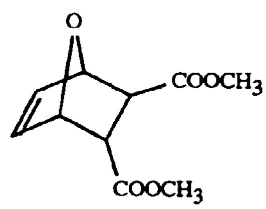 (3),

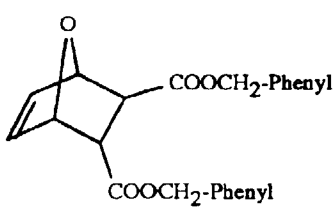 (4), 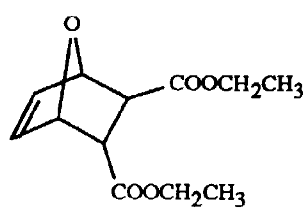 (5),

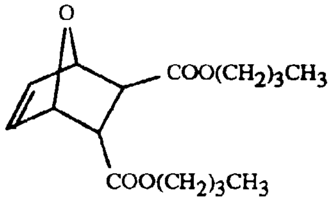 (6), 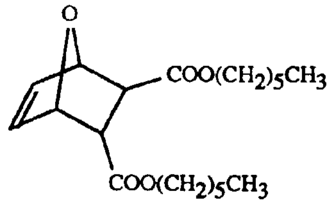 (7),

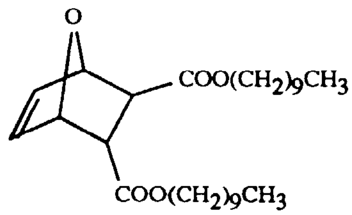

(8),

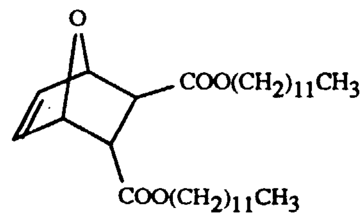

(9),

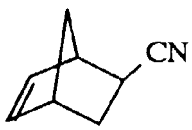

(10),

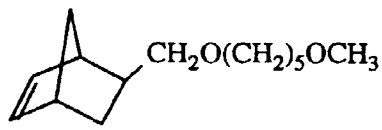

(11),

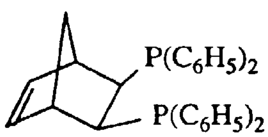

(12),

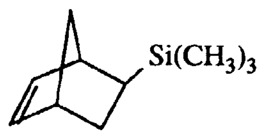

(13),

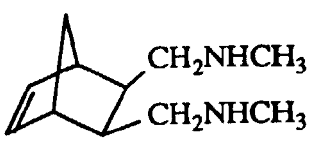

(14),

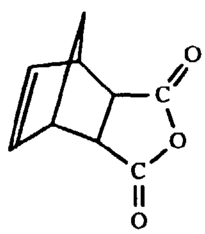

(15),

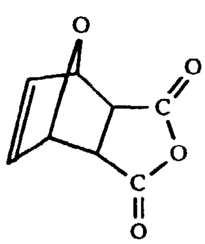

(16),

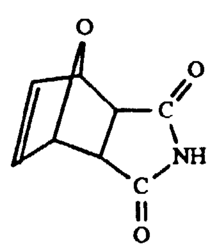

(17),

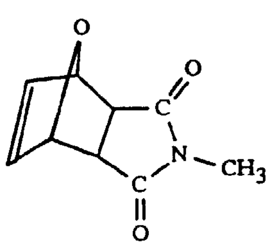

(18),

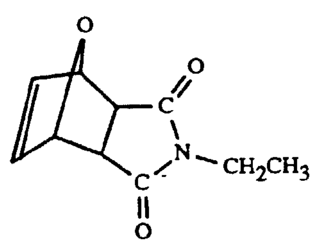

(19),

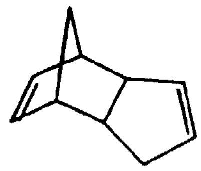 (20), 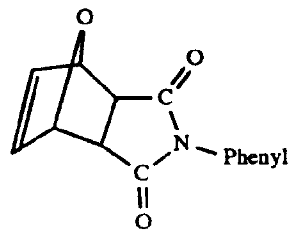 (21),

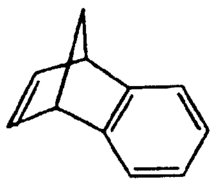 (22), 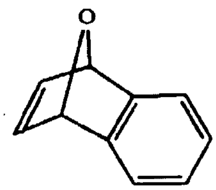 (23),

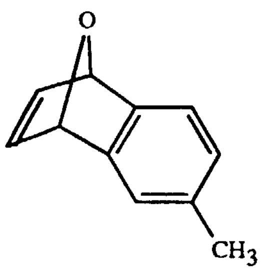 (24), 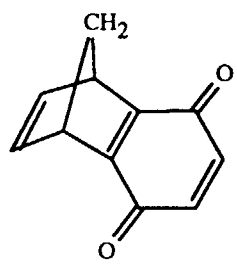 (25),

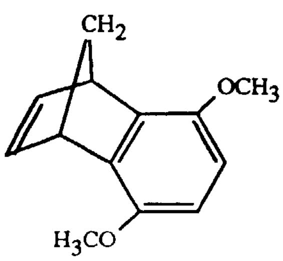 (26), 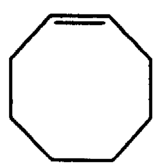 (27), 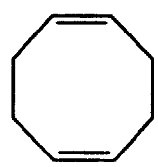 (28),

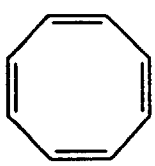 (29), 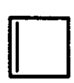 (30), 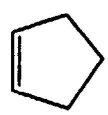 (31),

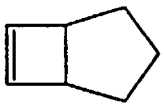 (32), 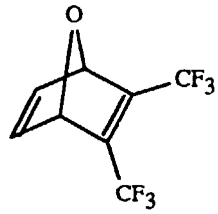 (33), 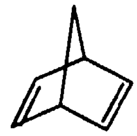 (34),

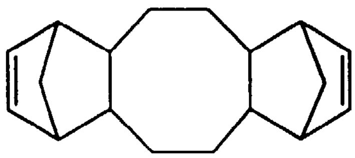 (35), 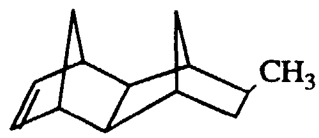 (36),

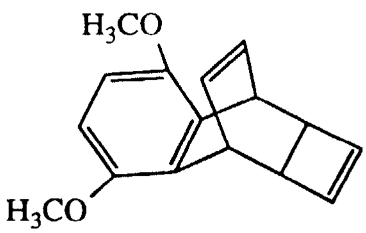 (37), 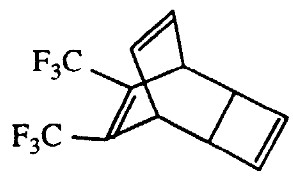 (38),

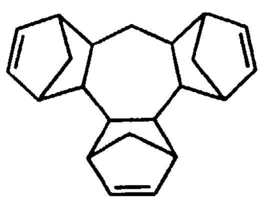 (39), 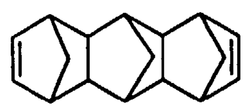 (40),

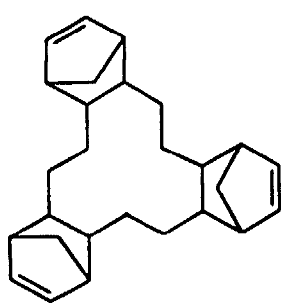 (41), 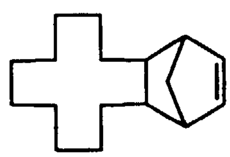 (42),

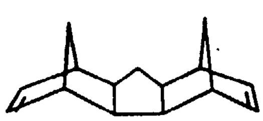 (43) und 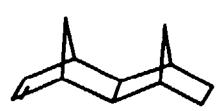 (44).

Die erfindungsgemäss zu verwendenden Niob(V)- und Tantal(V)verbindungen enthalten ein Metallatom. Die am Metall gebundene Methylgruppe oder monosubstituierte Methylgruppe ist mindestens zweimal, besonders bevorzugt zwei- bis fünfmal und insbesondere bevorzugt zwei- oder dreimal als Ligand gebunden. Dieser Ligand entspricht bevorzugt der Formel VII,

$$-CH_2-R \qquad (VII),$$

worin

R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituertes $C_6$-$C_{16}$-Aryl oder $C_4$-$C_{15}$-Heteroaryl mit 1 bis 3 Heteroatomen aus der Gruppe O, S und N darstellt; und

$R_{26}$, $R_{27}$ und $R_{28}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy ist; und

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

Bedeuten $R_{26}$ bis $R_{31}$ Alkyl, so kann es linear oder verzweigt sein und bevorzugt 1 bis 8 und besonders bevorzugt 1 bis 4 C-Atome enthalten. Bedeuten $R_{28}$ bis $R_{31}$ Aryl, so handelt es sich bevorzugt um Phenyl oder Naphthyl.

Bedeutet R in Formel VII Aryl, so handelt es sich bevorzugt um Phenyl oder Naphthyl. Bedeutet R in Formel VII Heteroaryl, so handelt es sich bevorzugt um Pyridinyl, Furanyl, Thiophenyl oder Pyrrolyl.

Bevorzugte Substituenten für $R_{26}$ bis $R_{31}$ sind im Rahmen der Definitionen Methyl, Ethyl, Methoxy und Ethoxy. Beispiele für die Reste $R_{26}$ bis $R_{31}$ sind zuvor unter den Verbindungen der Formel I angegeben worden.

In einer bevorzugten Ausführungsform bedeutet die Gruppe R in Formel VII H, $-C(CH_3)_3$, $-C(CH_3)_2C_6H_5$, unsubstituiertes oder mit Methyl, Ethyl, Methoxy oder Ethoxy substituiertes Phenyl, $-CF_3$, oder $-Si(CH_3)_3$.

Die übrigen Valenzen des Niobs und Tantals sind bevorzugt mit thermostabilen Neutralliganden abgesättigt, wobei die Definition der Thermostabilität eingangs gegeben wurde. Es handelt sich vorteilhafterweise um gleiche oder verschiedene Liganden aus der Gruppe bestehend aus =O, $=N-R_{33}$, sekundären Aminen mit 2 bis 18 C-Atomen, $R_{32}O$-, $R_{32}S$-, Halogen, Cyclopentadienyl, überbrücktem Biscyclopentadienyl, tridentaten monoanionischen Liganden und Neutralliganden wie zum Beispiel Ethern, Nitrilen, CO und tertiären Phosphinen und Aminen, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet.

Sekundäre Amine sind bevorzugt solche der Formel $R_{34}R_{35}N$-, worin $R_{34}$ und $R_{35}$ unabhängig voneinander lineares oder verzweigtes $C_1$-$C_{18}$-Alkyl, $C_5$- oder $C_6$-Cycloalkyl, unsubstituiertes oder mit $C_1$-$C_6$-Alkoxy oder Halogen substituiertes Benzyl oder Phenylethyl oder $(C_1$-$C_6$-alkyl$)_3Si$; oder zusammen Tetramethylen, Pentamethylen oder 3-Oxapentan-1,5-diyl bedeuten. Das Alkyl enthält bevorzugt 1 bis 12 und besonders bevorzugt 1 bis 6 C-Atome. Einige Beispiele sind Dimethyl-, Diethyl-, Di-n-propyl-, Di-i-propyl-, Di-n-butyl-, Methyl-ethyl-, Dibenzyl-, Benzyl-methyl-, Diphenyl-, Phenyl-methylamino und Di(trimethylsilyl)amino.

Halogen als weiterer Ligand an den Metallatomen oder als Substituent ist bevorzugt Fluor oder Chlor und besonders bevorzugt Chlor.

Das Cyclopentadienyl kann unsubstituiert oder mit ein bis fünf $C_1$-$C_4$-Alkyl, besonders Methyl oder -Si($C_1$-$C_4$-Alkyl), besonders $-Si(CH_3)_3$ substituiert sein. Überbrückte Cyclopentadienyle sind besonders solche der Formel $R_{36}$-A-$R_{36}$, worin $R_{36}$ unsubstituiertes oder mit ein bis fünf $C_1$-$C_4$-Alkyl, besonders Methyl, oder -Si($C_1$-$C_4$-Alkyl), besonders $-Si(CH_3)_3$ substituiertes Cyclopentadienyl darstellt und A für $-CH_2$-, $-CH_2-CH_2$-, $-Si(CH_3)_2$-, $-Si(CH_3)_2-Si(CH_3)_2$- oder $-Si(CH_3)_2-O-Si(CH_3)_2$- steht.

Bei Ethern als Neutralliganden kann es sich um Dialkylether mit 2 bis 8 C-Atomen oder cyclische Ether mit 5 oder 6 Ringgliedern handeln. Einige Beispiele sind Diethylether, Methylethylether, Diethylether, Di-n-propylether, Di-i-propylether, Di-n-butylether, Ethylenglykoldimethylether, Tetrahydrofuran und Dioxan.

Bei Nitrilen als Neutralliganden kann es sich um aliphatische oder aromatische Nitrile mit 1 bis 12, vorzugsweise 1 bis 8 C-Atomen handeln. Einige Beispiele sind Acetonitril, Propionitril, Butylnitril, Benzonitril und Benzylnitril.

Bei tertiären Aminen und Phosphinen als Neutralliganden kann es sich um solche mit 3 bis 24, vorzugsweise 3 bis 18 C-Atomen handeln. Einige Beispiele sind Trimethylamin und -phosphin, Triethylamin und -phosphin, Tri-n-propylamin und -phosphin, Tri-n-butylamin und -phosphin, Triphenylamin und -phosphin, Tricyclohexylamin und -phosphin, Phenyldimethylamin und -phosphin, Benzyldimethylamin und -phosphin, 3,5-Dimethylphenyl-dimethylamin und -phosphin.

Bei den tridentaten monoanionischen Liganden kann es sich zum Beispiel um Hydro(trispyrazol-1-yl)borate oder Alkyl(trispyrazol-1-yl)borate, die unsubstituiert oder mit ein bis drei $C_1$-$C_4$-Alkyl substituiert sind [siehe Trofimenko, S., Chem. Rev., 93:943-980 (1993)], oder um $[C_5(R'_5)Co(R_{37}R_{38}P{=}O)_3]^{\ominus}$, worin R' H oder Methyl und $R_{37}$ sowie $R_{38}$ unabhängig voneinander $C_1$-$C_4$-Alkyl, $C_1$-$C_4$-Alkoxy oder Phenyl bedeuten [siehe Kläui, W., Angew. Chem. 102: 661-670 (1990)], handeln.

Bei Halogen als Substituent für die Reste $R_{32}$ und $R_{33}$ handelt es sich bevorzugt um Fluor und besonders bevorzugt um Chlor. Die Substituenten Alkyl, Alkoxy oder Alkoxy im Alkoxymethyl oder Ethyl enthalten bevorzugt 1 bis 4 und besonders 1 oder 2 C-Atome. Beispiele sind Methyl, Ethyl, n- und i-Propyl, n-, i- und t-Butyl, Methoxy, Ethoxy, n- und i-Propyloxy und n-, i- und t-Butyloxy.

$R_{32}$ und $R_{33}$ enthalten als Alkyl bevorzugt 1 bis 12, besonders bevorzugt 1 bis 8, und insbesondere bevorzugt 1 bis 4 C-Atome. Bevorzugt handelt es sich um verzweigtes Alkyl. Einige Beispiele für $R_{32}$ sind Methoxy, Ethoxy, n- und i-Propyloxy, n-, i- und t-Butyloxy, Hexafluor-i-propyloxy und Hexa- sowie Perfluorbutyloxy.

Einige Beispiele für substituiertes Phenyl und Benzyl für $R_{32}$ und $R_{33}$ sind p-Methylphenyl oder Benzyl, p-Fluor- oder p-Chlorphenyl oder -benzyl, p-Ethylphenyl oder -benzyl, p-n- oder i-Propylphenyl oder -benzyl, p-i-Butylphenyl oder -benzyl, 3-Methylphenyl oder -benzyl, 3-i-Propylphenyl oder -benzyl, 3,5-Dimethylphenyl oder -benzyl, 3,5-i-Propylphenyl oder -benzyl, 3,5-n- oder -t-Butylphenyl und -benzyl. $R_{33}$ stellt besonders bevorzugt unsubstituiertes oder mit $C_1$-$C_4$-Alkyl oder $C_1$-$C_4$-Alkoxy substituiertes Phenyl dar.

In einer bevorzugten Ausführungsform entsprechen die Niob- und Tantalverbindungen besonders der Formel VIII,

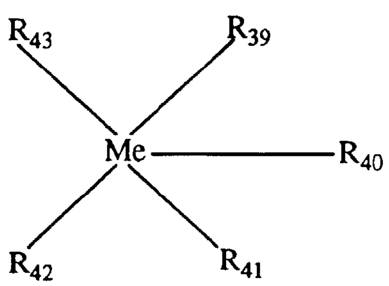

(VIII),

worin

Me für Nb(V) oder Ta(V) steht,

mindestens zwei, bevorzugt zwei oder drei der Reste $R_{39}$ bis $R_{43}$ einen Rest $-CH_2-R$ der Formel VII bedeuten, worin R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituiertes $C_6$-$C_{16}$-Aryl oder $C_4$-$C_{15}$-Heteroaryl mit 1 bis 3 Heteroatomen aus der Gruppe O, S und N darstellt;

$R_{26}$, $R_{27}$ und $R_{28}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy ist; und

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

zwei der übrigen Reste von $R_{39}$ bis $R_{43}$ zusammen =O oder $=N-R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder

die übrigen Reste von $R_{39}$ bis $R_{43}$ unabhängig voneinander Sekundäramino mit 2 bis 18 C-Atomen, $R_{32}O$- oder $R_{32}S$-, Halogen, Cyclopentadienyl oder überbrücktes Biscylopentadienyl oder einen Neutralliganden bedeuten,

worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

Für die Reste R und $R_{26}$ bis $R_{33}$ gelten die zuvor angebenen Bevorzugungen.

In einer besonders bevorzugten Ausführungsform werden im erfindungsgemässen Verfahren Niob- und Tantalverbindungen der Formel VIII verwendet, worin

a) $R_{39}$ bis $R_{43}$ je einen Rest der Formel VII $-CH_2-R$ bedeuten, oder

b) $R_{39}$ und $R_{40}$ je einen Rest der Formel VII $-CH_2-R$ darstellen, $R_{41}$ und $R_{42}$ zusammen den Rest $=N-R_{33}$ bedeuten und $R_{43}$ unsubstituiertes oder substituiertes Cyclopentadienyl, $R_{32}$-O- oder Halogen darstellt, oder

c) $R_{39}$, $R_{40}$ und $R_{41}$ je einen Rest der Formel VII $-CH_2-R$ darstellen und $R_{42}$ und $R_{43}$ zusammen den Rest $=N-R_{33}$ bedeuten, oder

$R_{39}$, $R_{40}$, $R_{41}$ und $R_{42}$ je einen Rest der Formel VII $-CH_2-R$ darstellen und $R_{43}$ unsubstituiertes oder substituiertes Cyclopentadienyl, $R_{32}$-O- oder Halogen bedeutet,

wobei R, $R_{32}$ und $R_{33}$ die voranstehenden Bedeutungen haben. Für R, $R_{32}$ und $R_{33}$ gelten die voranstehenden Bevorzugungen.

Ganz besonders bevorzugt werden im erfindungsgemässen Verfahren Niob- und Tantalverbindungen der Formeln IX, IXa oder IXb verwendet,

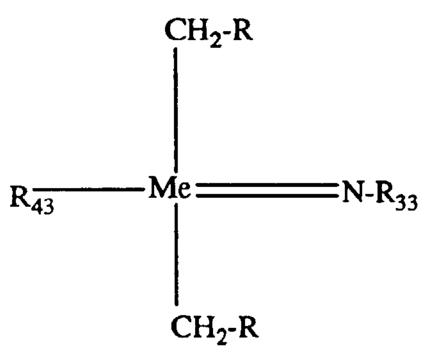

(IX),

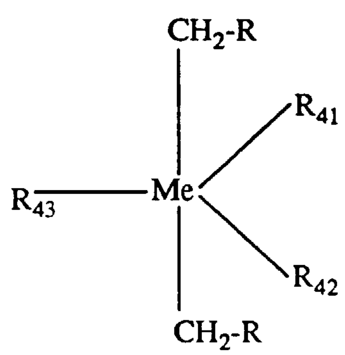

(IXa),

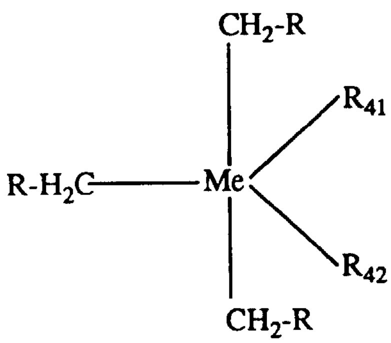

(IXb),

worin

| | |
|---|---|
| Me | für Nb(V) oder Ta(V) steht, |
| R | H, $-C(CH_3)_3$, $-C(CH_3)_2-C_6H_5$, $-C_6H_5$ oder $-Si(C_1-C_4\text{-Alkyl})_3$ darstellt, |
| $R_{33}$ | Phenyl oder mit ein bis drei $C_1$-$C_4$-Alkyl oder $C_1$-$C_4$-Alkoxy substituiertes Phenyl bedeutet, |
| $R_{43}$ | in Formel IX die Gruppe $-CH_2-R$ oder F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt; |
| $R_{41}$, $R_{42}$ und $R_{43}$ | in Formel IXa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten; und |
| $R_{41}$ und $R_{42}$ | in Formel IXb unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpopyloxy und Nonafluorpropyloxy. |

Einige Beispiele für Niob(V)- und Tantal(V)verbindungen sind [Cp bedeutet Cyclopentadienyl und Me bedeutet Nb (V) oder Ta(V)]:
$Me[CH_2Si(CH_3)_3]_5$, $Cp_2Me[(CH_2C(CH_3)_2-C_6H_5)]_3$, Me(=N-2,6-dimethyl$C_6H_3$)$(CH_3)_3$, Me(=N-$C_6H_5$)$[OC(CH_3)_3][(CH_2Si(CH_3)_3)]_2$, Me(=N-2,6-diisopropyl$C_6H_3$)$[(CH_2-C_6H_5)]_3$, Me(=N-$C_6H_5$)$[OCCH_3(CF_3)_2]$ $[(CH_2Si(CH_3)_3)]_2$, CpMe$[OCCH_3(CF_3)_2]_2[(CH_2-C_6H_5)]_2$, Me(=N-2,6-diisopropyl$C_6H_3$)$[(CH_2C(CH_3)_2-C_6H_5)]_2Cl$, $Cp_2Me(CH_3)_2[OCH(CH_3)_2]$, Me(=N-2,6-dimethyl$C_6H_3$)$[(CH_2-C_6H_5)]_3$, CpMe$[OCH(CH_3)_2]_2[(CH_2Si(CH_3)_3)]_2$, $Cp_2Me[(CH_2-C_6H_5)]_3$, $Me[CH_2Si(CH_3)_3]_3Cl_2$, $Me[CH_2Si(CH_3)_3]_3[OCH_2C(CH_3)_3]_2$, $Cp_2Me$[3,5-dimethyl$C_6H_3O$)] $[(CH_2Si(CH_3)_3)]_2$, Me(2,6-Diisopropylphenyloxy)$_2(CH_3)_3$, $Cp_2Me(CH_3)_3$, Me(2,6-Dimethylphenyloxy)$_2(CH_3)_3$, $Me[CH_2Si(CH_3)_3]_3[OCH(CH_3)]_2$, CpMe$[OC(CH_3)_2]_2[(CH_2-C_6H_5)]_2$, $Cp_2Me[(CH_2Si(CH_3)_3)]_3$.

Die erfindungsgemäss zu verwendenden Niob- und Tantalverbindungen sind bekannt oder nach bekannten und analogen Verfahren ausgehend von den gegebenenfalls substituierten Metallhalogeniden über Grignardreaktionen und/oder Substitutionsreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

Das erfindungsgemäße Verfahren kann in Anwesenheit eines inerten Lösungsmittels durchgeführt werden. Ein besonderer Vorteil des erfindungsgemäßen Verfahrens ist jener, daß bei flüssigen Monomeren das Verfahren ohne die Verwendung eines Lösungsmittels durchgeführt werden kann. Inert bedeutet, dass sich die Wahl der Lösungsmittel nach der Reaktivität der Niob- und Tantalverbindungen richtet, zum Beispiel, dass protisch polare Lösungsmittel nicht verwendet werden, wenn Substitutionsreaktionen wie der Austausch von Halogen durch Alkoxy zu erwarten sind.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Bevorzugte Lösungsmittel sind aliphatische und aromatische Kohlenwasserstoffe sowie Gemische solcher Lösungsmittel.

Es ist besonders hervorzuheben, dass die erfindungsgemäss im Verfahren eingesetzten Zusammensetzungen aus einem gegebenenfalls substituierten Cycloolefin und Katalysator oft unempfindlich gegen Sauerstoff sind, was eine Lagerhaltung sowie Reaktionsausführung ohne Schutzgas ermöglicht. Es empfiehlt sich aber der Ausschluss von Feuchtigkeit, also die Verwendung trockener Reaktions- und Lagerbedingungen.

Die für das erfindungsgemässe Verfahren eingesetzten Monomere der Formel I und Katalysatoren können sowohl getrennt als auch gemeinsam als Gemisch gelagert werden, da der verwendete Katalysator eine besonders hohe Stabilität aufweist. Das Gemisch kann vor der photochemischen Polymerisation als gebrauchsfertige Formulierung gelagert werden, was für die grosstechnische Anwendung des erfindungsgemässen Verfahrens von Vorteil ist. Die Lagerung erfolgt wegen der hohen Photosensitivität besonders im UV-Licht zweckmässig unter Lichtausschluss.

Ein weiterer Gegenstand der Erfindung ist eine photopolymerisierbare Zusammensetzung, enthaltend (a) ein cyclisches Olefin oder mindestens zwei verschiedene cyclische Olefine und (b) eine katalytisch wirksame Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält.

Die erfindungsgemässe Zusammensetzung kann zusätzlich weitere nichtflüchtige offenkettige Comonomere enthalten, die mit den gespannten Cycloolefinen Copolymere bilden. Bei Mitverwendung von zum Beispiel Dienen können sich vernetzte Polymerisate bilden. Einige Beispiele für solche Comonomere sind olefinisch mono- oder di-ungesättigte Verbindungen wie Olefine und Diene aus der Gruppe Penten, Hexen, Hepten, Octen, Decen, Dodecylen, Acryl- und Methacrylsäure, deren Ester und Amide, Vinylether, Styrol, Butadien, Isopren und Chlorbutadien.

Die weiteren zur Metathesepolymerisation fähigen Olefine sind in der erfindungsgemässen Zusammensetzung zum Beispiel in einer Menge von bis zu 80 Gew. %, bevorzugt 0,1 bis 80 Gew. %, bevorzugter 0,5 bis 60 Gew. % und besonders bevorzugt 5 bis 40 Gew. % enthalten, bezogen auf die Gesamtmenge an Verbindungen der Formel I und weiterer zur Metathesepolymerisation fähiger Olefine.

Die erfindungsgemässe Zusammensetzung kann Formulierungshilfstoffe enthalten. Bekannte Hilfsstoffe sind Antistatika, Antioxidantien, Lichtschutzmittel, Weichmacher, Farbstoffe, Pigmente, Füllstoffe, Verstärkerfüllstoffe, Gleitmittel, Haftvermittler, viskositätserhöhende Mittel und Entformungshilfsmittel. Die Füllstoffe können in überraschend hohen Anteilen zugegen sein, ohne die Polymerisation nachteilig zu beeinflussen, zum Beispiel in Mengen von bis zu 70 Gew.-%, bevorzugt 1 bis 70 Gew.%, bevorzugter 5 bis 60 Gew.-%, besonders bevorzugt 10 bis 50 Gew.-% und insbesondere bevorzugt 10 bis 40 Gew.-%, bezogen auf die Zusammensetzung. Füllstoffe und Verstärkerfüllstoffe zur Verbesserung der optischen, physikalischen, mechanischen und elektrischen Eigenschaften sind in grosser Vielzahl bekannt geworden. Einige Beispiele sind Glas und Quarz in Form von Pulvern, Kugeln und Fasern, Metall- und Halbmetalloxide, Carbonate wie $MgCO_3$, $CaCO_3$, Dolomit, Metallsulfate wie Gips und Schwerspat, natürliche und synthetische Silikate wie Talk, Zeolithe, Wollastonit, Feldspate, Tonerden wie Chinaclay, Gesteinsmehle, Whisker, Carbonfasern, Kunststofffasern oder -pulver und Russ. Viskositätserhöhende Mittel sind insbesondere Metathesepolymerisate, die olefinisch ungesättigte Gruppen aufweisen und bei der Polymerisation in das Polymer eingebaut werden können. Solche Metathesepolymerisate sind bekannt und zum Beispiel unter dem Handelsnamen Vestenamere® käuflich. Andere viskositätserhöhende Mittel sind Polybutadien, Polyisopren oder Polychlorbutadien, sowie Copolymere von Butadien, Isopren und Chloropren mit Olefinen. Die viskositätserhöhenden Mittel können in einer Menge von 0,1 bis 50, bevorzugt 1 bis 30, und besonders bevorzugt 1 bis 20 Gew.-% enthalten sein bezogen auf die Zusammensetzung. Bei der Verwendung von Füllstoffen ist es zweckmässig, die optische Transparenz für die Polymerisation zu erhalten oder die Polymerisation in dünnen Schichten durchzuführen.

Es ist beim erfindungsgemässen Verfahren nicht notwendig, die Bestrahlung der Reaktionsmischung über die gesamte Reaktionsdauer aufrechtzuerhalten. Ist die Polymerisation einmal photochemisch initiiert, erfolgt der weitere Reaktionsverlauf selbst im Dunkeln selbstständig. Vorteilhafterweise wird die Bestrahlung mit Licht der Wellenlänge im Bereich von 50 nm bis 1000 nm, bevorzugt im Bereich von 200 nm bis 500 nm und ganz besonders bevorzugt im UV-Bereich durchgeführt Die Bestrahlungsdauer ist von der Art der Lichtquelle abhängig. Vorzugsweise werden erfindungsgemäß UV-Laser oder UV-Lampen eingesetzt. Die Bestrahlung des Katalysators kann sowohl vor, während, als

auch nach der Monomerenzugabe erfolgen.

Geeignete Bestrahlungszeiten sind von einer Minute bis zu 8 Stunden, insbesondere 5 Minuten bis zu 4 Stunden. Die Reihenfolge der Zugabe von Monomeren und Katalysator ist unkritisch. Das Monomer kann sowohl vorgelegt als auch nach Einbringen des Katalysators zugegeben werden. Ebenso kann der Katalysator vorbestrahlt und anschließend das Monomer zugegeben werden. Ferner kann auch die Katalysator und Monomer enthaltende Lösung bestrahlt werden.

Das erfindungsgemässe Verfahren wird bevorzugt bei Raumtemperatur bis leicht erhöhter Temperatur durchgeführt. Eine Temperaturerhöhung dient der Erhöhung der Reaktionsgeschwindigkeit. Die verwendeten Katalysatoren initiieren nur in Ausnahmefällen für sich eine thermische Polymerisation. Bei den zur Reaktionsbeschleunigung gewählten Temperaturen findet daher überwiegend eine Photopolymerisation statt. Es ist aber zu erwähnen, dass die Katalysatoren durch ausreichende Bestrahlung in thermoaktive Katalysatoren umgewandelt werden können.

Insbesondere wird das erfindungsgemäße Verfahren bei Temperaturen von -20°C bis +110°C durch geführt.

Ein ganz besonderer und überraschender Vorteil des erfindungsgemässen Verfahrens besteht darin, dass die verwendeten Niob(V)- und Tantal(V)verbindungen nach der Bestrahlung als thermische Katalysatoren wirken. Daraus ergibt sich die Möglichkeit, die Polymerisation nach einer kurzen Bestrahlungszeit durch Wärmezufuhr fortzusetzen und zu beenden, was in verschiedenen Bereichen der Herstellung von Formkörpern oder Beschichtungen wirtschaftliche und technische Vorteile bietet. Insbesondere ist das kombinierte Verfahren günstig für die Herstellung von Thermoplasten.

Ein weiterer Gegenstand der Erfindung ist ein Verfahren zur photokatalytisch induzierten und nachfolgenden thermischen Polymerisation eines cyclischen Olefins oder mindestens zwei verschiedener cyclischer Olefine in Gegenwart einer Metallverbindung als Katalysator, das dadurch gekennzeichnet ist, dass man eine photochemische Ringöffnungs-Metathese-Polymerisation durchführt, indem man zunächst die Cycloolefine in Gegenwart einer katalytischen Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, bestrahlt; oder eine katalytische Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, gegebenenfalls in einem inerten Lösungsmittel bestrahlt und dann mit mindestens einem Cycloolefin vermischt; und

b) dann die Polymerisation durch Erhitzen und ohne Bestrahlung beendet.

Für die Verfahrensstufe a) gelten die zuvor angegebenen Bevorzugungen. Die Bestrahlungsdauer hängt im wesentlichen von der gewünschten Reaktionsführung ab. Eine kurzzeitige Bestrahlung wird zum Beispiel dann gewählt, wenn man die Polymerisation nur durch Bestrahlung initiieren und durch Erhitzen beenden will. Kurzzeitig kann eine Bestrahlungszeit bis zu 60 Sekunden, bevorzugt 5 bis 60 Sekunden und besonders bevorzugt 10 bis 40 Sekunden bedeuten. Eine längere Bestrahlungszeit wird zum Beispiel dann gewählt, wenn man die Polymerisation überwiegend unter Bestrahlung durchführen und die endgültige Polymerisation nur durch Nachtempern beenden will.

Erhitzen in der Verfahrensstufe b) kann eine Reaktionstemperatur von 50 bis 200 °C, bevorzugt 50 bis 150 °C und besonders bevorzugt 70 bis 120 °C bedeuten.

Katalytische Mengen bedeutet im Rahmen der vorliegenden Erfindung bevorzugt eine Menge von 0,001 bis 20 Mol-%, besonders bevorzugt 0,01 bis 15 Mol-% und ganz besonders bevorzugt 0,01 bis 10 Mol-%, bezogen auf die Menge des Monomers.

Die thermischen Katalysatoren für die ringöffnende Metathesepolymerisation von cyclischen Olefinen werden hergestellt, indem man eine thermostabile Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, in Substanz oder in einem Lösungsmittel bestrahlt.

Bei den erfindungsgemäss zu verwendenden Cycloolefinen handelt es sich um gespannte Ringe. Cyclohexen als Ausnahme kann generell mit Olefin-Metathese nicht homopolymerisiert werden. Diese Ausnahme ist dem Fachmann bekannt und beispielsweise in Ivin, K.J., Saegusa, T. (Hrsg.), Ring-Opening Polymerisation 1:139-144 Elsevier Applied Science Publishers, London und New York (1984) beschrieben.

Mit dem erfindungsgemässen Verfahren können strahlungsgehärtete Oligomere und Polymere mit gleichen oder verschiedenen Struktureinheiten der Formel XI,

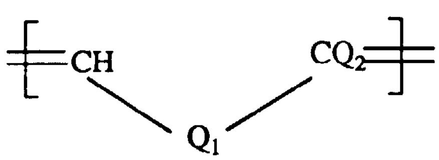

(XI),

worin $Q_1$ und $Q_2$ die unter der Formel I angegebenen Bedeutungen haben, hergestellt werden. Für diese Polymeren gelten die zuvor angegebenen Bevorzugungen. Es kann sich um Homopolymere oder Copolymere mit statistischer Verteilung der Struktureinheiten, Pfropfpolymere oder um Blockpolymere handeln. Sie können ein mittleres Molekulargewicht ($\overline{M}w$) von z. B. 500 bis zu 2 Millionen Dalton, vorzugsweise 1000 bis 1 Million Dalton (bestimmt nach GPC durch Vergleich mit engverteilen Polystyrolstandards) aufweisen.

Mit dem erfindungsgemässen Verfahren können thermoplastisch verformbare Werkstoffe zur Herstellung von Formkörpern aller Art, Beschichtungen und Reliefabbildungen hergestellt werden.

Je nach verwendetem Monomer können die erfindungsgemäss hergestellten Polymere sehr verschiedene Eigenschaften aufweisen. Einige zeichnen sich durch sehr hohe Sauerstoffpermeabilität, tiefe Dielektrizitätskonstanten, gute Wärmestabilität und geringe Wasserabsorption aus. Andere haben hervorragende optische Eigenschaften wie zum Beispiel hohe Transparenz und niedrige Brechungsindices. Ferner ist insbesondere der geringe Schrumpf hervorzuheben. Daher können sie in sehr unterschiedlichen technischen Gebieten Verwendung finden.

Die erfindungsgemässen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit und die hohe Lösungsmittelbeständigkeit zu erwähnen.

Diese Polymeren eignen sich zur Herstellung von medizinischen Geräten, Implantaten oder Kontaktlinsen; zur Herstellung von elektronischen Bauteilen; als Bindemittel für Lacke; als photohärtbare Zusammensetzungen für den Modellbau oder als Klebstoffe zum Verkleben von Substraten mit niedrigen Oberflächenenergien (zum Beispiel Teflon, Polyethylen und Polypropylen), sowie als photopolymerisierbare Zusammensetzung in der Stereolithographie. Die erfindungsgemäßen Zusammensetzungen können auch zur Herstellung von Lacken durch Photopolymerisation verwendet werden, wobei einerseits klare (transparente) und sogar pigmentierte Zusammensetzungen verwendet werden können. Es können sowohl Weiss- als auch Buntpigmente verwendet werden. Ferner ist die Herstellung von Formkörpern nach thermoplastischen Formgebungsverfahren für Gebrauchsgegenstände aller Art zu erwähnen.

Die erfindungsgemässen photohärtbaren oder photo- und thermohärtbaren Zusammensetzungen eignen sich besonders zur Herstellung von Schutzschichten und Reliefabbildungen. Ein weiterer Gegenstand der Erfindung ist eine Variante des erfindungsgemäßen Verfahrens zur Herstellung von beschichteten Materialien oder Reliefabbildungen auf Substraten, bei dem man eine Zusammensetzung aus cyclischem Olefin, Katalysator und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation bestrahlt, oder die Schicht durch eine Photomaske bestrahlt und anschließend die nichtbestrahlten Anteile mit einem Lösungsmittel entfernt. Mit diesem Verfahren können Oberflächen von Substraten modifiziert oder geschützt werden, oder es können zum Beispiel gedruckte Schaltungen, Druckplatten oder Druckwalzen hergestellt werden. Bei der Herstellung von gedruckten Schaltungen können die erfindungsgemäßen Zusammensetzungen auch als Lötstopplacke eingesetzt werden. Weitere Anwendungsmöglichkeiten sind die Herstellung von Siebdruckmasken, die Verwendung als strahlungshärtbare Druckfarben für den Offset-, Sieb- und Flexodruck.

Gegenstand der vorliegenden Erfindung ist ferner ein beschichtetes Trägermaterial, dadurch gekennzeichnet, dass auf einem Träger eine Schicht aus (a) einem cyclischen Olefin oder mindestens zwei verschiedenen cyclischen Olefinen und (b) einer katalytisch wirksamen Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in $\alpha$-Stellung enthält, aufgebracht ist.

Geeignete Trägermaterialien sind beispielsweise solche aus Glas, Mineralien, Keramiken, Kunststoffen, Holz, Halbmetallen, Metallen, Metalloxiden und Metallnitriden. Die Schichtdicken richten sich im wesentlichen nach der gewünschten Verwendung und können z.B. 0,1 bis 1000 $\mu$m, bevorzugt 0,5 bis 500 $\mu$m, besonders bevorzugt 1 bis 100 $\mu$m betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Bei Beschichtungen werden oft besonders gute Resultate erzielt, wenn man zur Photometathese-Polymerisation Cycloolefine verwendet, die zusätzlich eine bis drei und bevorzugt eine weitere Doppelbindung enthalten und die im Rahmen der Erfindung polycyclische kondensierte Ringsysteme darstellen.

Die folgenden Beispiele erläutern die Erfindung weiter.

Beispiel 1 bis 7: Polymerisation von Cycloolefinen.

In einem Schlenkgefäss wird der Katalysator in Toluol vorgelegt. Dann wird das Cycloolefin in Toluol zugegeben und das Gefäss verschlossen. Die Mischung wird unter Rühren bestrahlt. Nach etwa 15 Sekunden wird ein Viskositätsanstieg beobachtet. Nach 5 Minuten wird die Reaktion durch Zugabe eines Tropfens Benzaldehyd abgebrochen und das Reaktionsgemisch in 100 ml Ethanol gegossen. Das ausgefallene Polymer wird abfiltriert, mit Ethanol gewaschen und dann im Vakuum getrocknet. Das Polymer wird durch Gelpermeationschromatographie [GPC; Lösungsmittel Tetrahydrofuran, die Zahlen- ($M_n$) und Gewichtsmittelwerte ($M_w$) des Molekulargewichts werden relativ zu Polystyrol-Eichstandards bestimmt] und $^1$H-NMR (Bruker 300 MHz; Lösungsmittel $CDCl_3$) charakterisiert.

Ein identisches Experiment ohne Belichtung bei 45 °C ergibt keinen Viskositätsanstieg und nach Zugabe von Ethanol fällt kein Polymer aus.

Als Katalysatoren werden eingesetzt:

A = $Ta[CH_2Si(CH_3)_3]_3Cl_2$
B = $Ta[2,6\text{-}(CH_3)_2C_6H_3O]_2(CH_3)_3$
C = $Ta[CH_2Si(CH_3)_3]_3[OCH(CH_3)_2]_2$
D = $Nb[2,6\text{-}(CH_3)_2C_6H_3O]_2(CH_3)_3$
E = $Ta[2,6\text{-}(CH_3)_2CHC_6H_3O]_2(CH_3)_3$

Als Monomere werden die Verbindungen (1) und (20) eingesetz.

Als Belichtungsquellen werden verwendet:

(a) 200 W Quecksilberdampf-Mitteldruck-UV-Lampe (Osram HBO 200 W/2, Hersteller Spindler & Hoyer, Göttingen).

(b) Selbstgebautes UV-Bestrahlungsgerät mit 4 X 40W R-UVA Lampen TL 40W/10R und 2 x 20W TL 20W/05 von Philips. Abstand etwa 25 cm.

Die Ergebnisse sind in Tabelle 1 angegeben:

Tabelle 1:

| Beispiel | Katalysator | Belichtung | Standzeit | Ausbeute | MG |
|---|---|---|---|---|---|
| 1 | 10 mg A | 3 min (a) | --- | 100 % | $M_n$=16 k |
| 2 | 10 mg C | 10 min (a) | 14 h 50°C | 4 % | vernetzt |
| 3 | 10 mg B | 10 min (a) | 14 h 50°C | 35 % | $M_n$=25 k |
| 4 | 10 mg E | 10 min (a) | 14 h 50°C | 90 % | $M_n$=165 k |
| 5 | 10 mg D | 3 min (a) | ---- | 80 % | $M_n$=2320 k |
| 6 | 250 mg A | 2 h (b) | 1 h 80°C | 100 % | vernetzt |
| 7 | 250 mg B | 14 h (b) | 14 h 50°C | 100 % | vernetzt |

Monomer: 500 mg (20) in Beispiel 1 bis 5 (Lösungsmittel: 5 ml Toluol); 25 g (1) in Beispielen 6 und 7 (in Substanz)
Belichtung: Lichtquelle (a) oder (b) bei 25°C
Standzeit: vor Aufarbeitung
MG: Molekulargewicht (GPC, g/mol)

## Patentansprüche

**1.** Verfahren zur photokatalytischen Polymerisation eines cyclischen Olefins oder mindestens zwei verschiedener cyclischer Olefine in Gegenwart einer Metallverbindung als Katalysator, dadurch gekennzeichnet, dass man eine photochemische Ringöffnungs-Metathese-Polymerisation in Gegenwart einer katalytischen Menge mindestens einer thermostabilen Niob(V)- oder Tantal(V)verbindung durchführt, die mindestens zwei Methylgruppen oder zwei monosubstituierte Methylgruppen am Metall gebunden enthält, wobei der Substituent kein Wasserstoffatom in $\alpha$-Stellung enthält.

**2.** Verfahren gemäss Anspruch 1, dadurch gekennzeichnet, dass es sich bei den cyclischen Olefinen um monocyclische Ringe oder polycyclische, überbrückte oder kondensierte Ringsysteme mit 2 bis 4 Ringen handelt, die unsubstituiert oder substituiert sind und gegebenenfalls ein oder mehrere Heteroatome aus der Gruppe O, S, N und Si in einem oder mehreren Ringen und gegebenenfalls kondensierte aromatische oder heteroaromatische Ringe enthalten.

3. Verfahren gemäss Anspruch 2, dadurch gekennzeichnet, dass die cyclischen Ringe 3 bis 16 Ringglieder enthalten.

4. Verfahren gemäss Anspruch 3, dadurch gekennzeichnet, dass die cyclischen Ringe 3 bis 12 Ringglieder enthalten.

5. Verfahren gemäss Anspruch 2, dadurch gekennzeichnet, dass die cyclischen Olefine weitere nicht-aromatische Doppelbindungen enthalten.

6. Verfahren gemäss Anspruch 1, dadurch gekennzeichnet, dass die Cycloolefine der Formel I

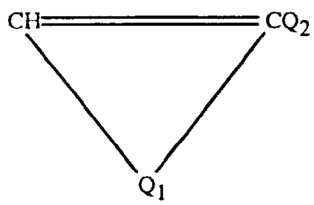

(I)

entsprechen, worin

| | |
|---|---|
| $Q_1$ | ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroarakyl oder $R_4$-X- substituiert ist; oder bei dem zwei benachbarte C-Atome mit -CO-O-CO- oder $-CO-NR_5-CO-$ substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist; |
| X und $X_1$ | unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen; |
| $R_1$, $R_2$ und $R_3$ | unabhängig voneinander $C_1$-$C_{12}$-Alkyl, $C_1$-$C_{12}$-Perfluoralkyl, Phenyl oder Benzyl bedeuten; |
| $R_4$ und $R_{13}$ | unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten; |
| $R_5$ und $R_{10}$ | unabhängig voneinander Wasserstoff, $C_1$-$C_{12}$Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind; |
| $R_6$, $R_7$ und $R_8$ | unabhängig voneinander $C_1$-$C_{12}$-Alkyl, $C_1$-$C_{12}$-Perfluoralkyl, Phenyl oder Benzyl bedeuten; |
| M | für ein Alkalimetall und $M_1$ für ein Erdalkalimetall stehen; und |
| u | für 0 oder 1 steht; |

wobei der mit $Q_1$ gebildete alicyclische Ring gegebenenfalls weitere nicht-aromatische Doppelbindungen enthält;

| | |
|---|---|
| $Q_2$ | Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt; |
| $R_{11}$ | $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet; |
| $X_2$ | -C(O)-O- oder $-C(O)-NR_{12}-$ ist; |
| $R_{12}$ | Wasserstoff, $C_1$-$C_{12}$-Alkyl, Phenyl oder Benzyl darstellt; |

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-,

$-NR_9$- und -N= ausgewählt sind; und

$R_9$ Wasserstoff, $C_1$-$C_{12}$-Alkyl, Phenyl oder Benzyl darstellt.

**7.** Verfahren gemäss Anspruch 6, dadurch gekennzeichnet, dass der alicyclische Ring, den $Q_1$ zusammen mit der $-CH=CQ_2$-Gruppe bildet, 3 bis 16 Ringatome aufweist, und wobei es sich um ein monocyclisches, bicyclisches, tricyclisches oder tetracyclisches Ringsystem handelt.

**8.** Verfahren gemäss Anspruch 6, dadurch gekennzeichnet, dass $Q_2$ in Formel I für Wasserstoff steht.

**9.** Verfahren gemäss Anspruch 6, dadurch gekennzeichnet, dass in den Verbindungen der Formel I

| | |
|---|---|
| $Q_1$ | ein Rest mit mindestens einem Kohlenstoffatom ist, der zusammen mit der $-CH=CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, $-NO_2$, $R_1R_2R_3Si-(O)_u$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_4$-X- substituiert ist; oder bei dem zwei benachbarte C-Atome in diesem Rest $Q_1$ mit -CO-O-CO- oder $-CO-NR_5-CO-$ substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, $-NO_2$, $R_6R_7R_8Si$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_3$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist; |
| X und $X_1$ | unabhängig voneinander für -O-, -S-, -CO-, -SO-, $-SO_2$-, -O-C(O)-, -C(O)-O-, $-C(O)-NR_5$-, $-NR_{10}-C(O)$-, $-SO_2-O$- oder $-O-SO_2$- stehen; |
| $R_1$, $R_2$ und $R_3$ | unabhängig voneinander $C_1$-$C_6$-Alkyl, $C_1$-$C_6$-Perfluoralkyl, Phenyl oder Benzyl bedeuten; |
| M | für ein Alkalimetall und $M_1$ für ein Erdalkalimetall stehen; |
| $R_4$ und $R_{13}$ | unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten; |
| $R_5$ und $R_{10}$ | unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind; |
| $R_6$, $R_7$ und $R_8$ | unabhängig voneinander $C_1$-$C_6$-Alkyl, $C_1$-$C_6$-Perfluoralkyl, Phenyl oder Benzyl darstellen; |
| u | für 0 oder 1 steht; |

wobei der mit $Q_1$ gebildete alicyclische Ring gegebenenfalls weitere nichtaromatische Doppelbindungen enthält;

| | |
|---|---|
| $Q_2$ | Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet; |
| $R_{11}$ | $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt; |
| $X_2$ | -C(O)-O- oder $-C(O)-NR_{12}$- ist; und |
| $R_{12}$ | Wasserstoff, $C_1$-$C_6$-Alkyl, Phenyl oder Benzyl bedeutet; |

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, $-NO_2$, -CN oder Halogen substituiert sind, und wobei die Heteroatome der Heterocycloalkyl-, Heteroaryl- und Heteroaralkylgruppen aus der Gruppe -O-, -S-, $-NR_9$- und -N= ausgewählt sind; und

$R_9$ Wasserstoff, $C_1$-$C_6$-Alkyl, Phenyl oder Benzyl bedeutet.

**10.** Verfahren gemäss Anspruch 6, dadurch gekennzeichnet, dass in den Verbindungen der Formel I

| | |
|---|---|
| $Q_1$ | ein Rest mit mindestens einem Kohlenstoffatom ist, der zusammen mit der $-CH=CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstitu- |

iert oder mit Halogen, -CN, $-NO_2$, $R_1R_2R_3Si$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, $-NO_2$, $R_6R_7R_8Si$-, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$-substituiert ist;

$R_1$, $R_2$ und $R_3$ unabhängig voneinander $C_1$-$C_4$-Alkyl, $C_1$-$C_4$-Perfluoralkyl, Phenyl oder Benzyl bedeuten;

M für ein Alkalimetall und $M_1$ für ein Erdalkalimetall stehen;

$R_4$ und $R_{13}$ unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten;

X und $X_1$ unabhängig voneinander für -O-, -S-, -CO-, -SO- oder $-SO_2$- stehen;

$R_6$, $R_7$ und $R_8$ unabhängig voneinander $C_1$-$C_4$-Alkyl, $C_1$-$C_4$-Perfluoralkyl, Phenyl oder Benzyl darstellen;

und $Q_2$ Wasserstoff bedeutet.

**11.** Verfahren gemäss Anspruch 1, dadurch gekennzeichnet, dass es sich bei den cyclischen Olefinen um Norbornen oder Norbornenderivate handelt.

**12.** Verfahren gemäss Anspruch 11, dadurch gekennzeichnet, dass es sich bei den Norbornenderivaten um solche der Formel II

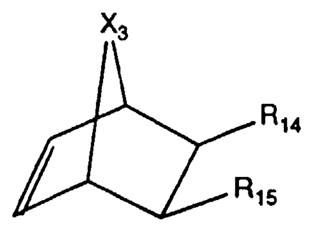

(II),

worin

$X_3$ $-CHR_{16}$-, Sauerstoff oder Schwefel;

$R_{14}$ und $R_{15}$ unabhängig voneinander Wasserstoff, -CN, Trifluormethyl, $(CH_3)_3Si$-O-, $(CH_3)_3Si$- oder $-COOR_{17}$; und

$R_{16}$ und $R_{17}$ unabhängig voneinander Wasserstoff, $C_1$-$C_{12}$-Alkyl, Phenyl oder Benzyl bedeuten;

oder
um solche der Formel III

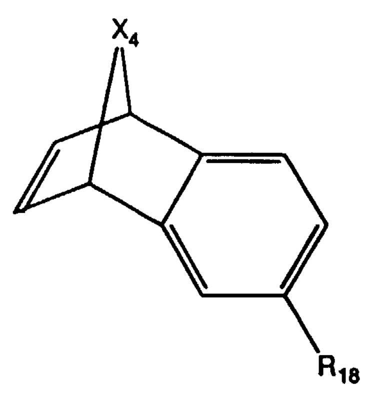

(III),

worin

$X_4$ -$CHR_{19}$-, Sauerstoff oder Schwefel;
$R_{19}$ Wasserstoff, $C_1$-$C_{12}$-Alkyl, Phenyl oder Benzyl; und
$R_{18}$ Wasserstoff, $C_1$-$C_6$-Alkyl oder Halogen bedeuten;

oder
um solche der Formel IV

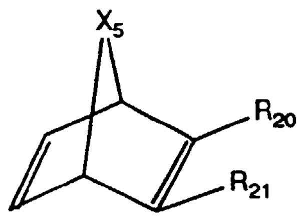

(IV),

worin

$X_5$ -$CHR_{22}$-, Sauerstoff oder Schwefel;
$R_{22}$ Wasserstoff, $C_1$-$C_{12}$-Alkyl, Phenyl oder Benzyl;
$R_{20}$ und $R_{21}$ unabhängig voneinander Wasserstoff, CN, Trifluormethyl, $(CH_3)_3Si$-O-, $(CH_3)_3Si$- oder -$COOR_{23}$; und
$R_{23}$ Wasserstoff, $C_1$-$C_{12}$-Alkyl, Phenyl oder Benzyl bedeuten;

oder
um solche der Formel V handelt,

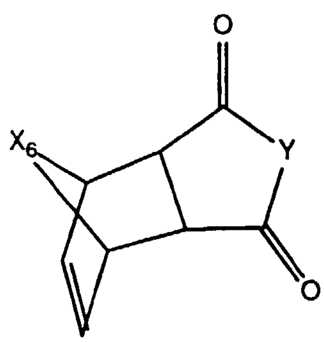

(V),

worin

$X_6$ -$CHR_{24}$-, Sauerstoff oder Schwefel;
$R_{24}$ Wasserstoff, $C_1$-$C_{12}$-Alkyl, Phenyl oder Benzyl;
Y Sauerstoff oder $\rangle$N- $R_{25}$; und
$R_{25}$ Wasserstoff, Methyl, Ethyl oder Phenyl bedeuten.

**13.** Verfahren gemäss Anspruch 1, dadurch gekennzeichnet, dass die am Metallatom gebundene Methylgruppe oder monosubstituierte Methylgruppe zwei- oder dreimal als Ligand gebunden ist.

**14.** Verfahren gemäss Anspruch 1, dadurch gekennzeichnet, dass die am Metallatom gebundene Methylgruppe oder monosubstituierte Methylgruppe der Formel VII entspricht,

$-CH_2-R$ (VII),

worin

R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituertes $C_6$-$C_{16}$-Aryl oder $C_4$-$C_{15}$-Heteroaryl mit 1 bis 3 Heteroatomen aus der Gruppe O, S und N darstellt, und $R_{26}$, $R_{27}$ und $R_{28}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy ist; und

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

**15.** Verfahren gemäss Anspruch 14, dadurch gekennzeichnet, dass die Gruppe R in Formel VII H, $-C(CH_3)_3$, $-C(CH_3)_2C_6H_5$, unsubstituiertes oder mit Methyl, Ethyl, Methoxy oder Ethoxy substituiertes Phenyl, $-CF_3$, oder $-Si(CH_3)_3$ darstellt.

**16.** Verfahren gemäss Anspruch 1, dadurch gekennzeichnet, dass die übrigen 1 bis 3 Valenzen der Nb(V)- und Ta(V)-Atome mit gleichen oder verschiedenen Liganden aus der Gruppe bestehend aus =O, $=N-R_{33}$, sekundären Aminen mit 2 bis 18 C-Atomen, $R_{32}O$-, $R_{32}S$-, Halogen, Cyclopentadienyl, überbrücktem Biscyclopentadienyl, tridentaten monoanionischen Liganden und Neutralliganden abgesättigt sind, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-Alkyl)amino, Di($C_1$-$C_6$-Alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-Alkyl)amino, Di($C_1$-$C_6$-Alkyl)amino-$C_1$-$C_3$-alkyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-Alkyl)amino, Di($C_1$-$C_6$-Alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-Alkyl)amino, Di($C_1$-$C_6$-Alkyl)amino-$C_1$-$C_3$-alkyl oder Halogen substituiertes Benzyl oder Phenylethyl bedeutet.

**17.** Verfahren gemäss Anspruch 1, dadurch gekennzeichnet, dass die Niob- und Tantalverbindungen der Formel VIII entsprechen,

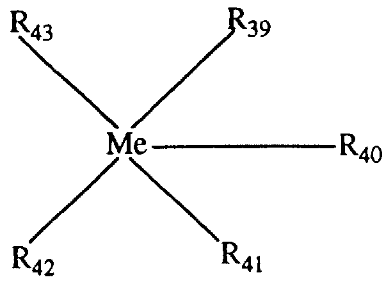

(VIII),

worin

Me für Nb(V) oder Ta(V) steht,

mindestens zwei der Reste $R_{39}$ bis $R_{43}$ einen Rest $-CH_2-R$ der Formel VII bedeuten, worin R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituertes $C_6$-$C_{16}$-Aryl oder $C_4$-$C_{15}$-Heteroaryl mit 1 bis 3 Heteroatomen aus der Gruppe O, S und N darstellt;

$R_{26}$, $R_{27}$ und $R_{28}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy ist; und

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

zwei der übrigen Reste von $R_{39}$ bis $R_{43}$ zusammen =O oder =N-$R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder

die übrigen Reste von $R_{39}$ bis $R_{43}$ unabhängig voneinander Sekundäramino mit 2 bis 18 C-Atomen, $R_{32}$O- oder $R_{32}$S-, Halogen, Cyclopentadienyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**18.** Verfahren gemäss Anspruch 17, dadurch gekennzeichnet, dass zwei oder drei der Reste $R_{39}$ bis $R_{43}$ einen Rest -$CH_2$R der Formel VII bedeuten.

**19.** Verfahren gemäss Anspruch 1, dadurch gekennzeichnet, dass man Niob- und Tantalverbindungen der Formel VIII verwendet, worin

a) $R_{39}$ bis $R_{43}$ je einen Rest der Formel VII -$CH_2$-R bedeuten, oder
b) $R_{39}$ und $R_{40}$ je einen Rest der Formel VII -$CH_2$-R darstellen, $R_{41}$ und $R_{42}$ zusammen den Rest =N-$R_{33}$ bedeuten und $R_{43}$ unsubstituiertes oder substituiertes Cyclopentadienyl, $R_{32}$-O- oder Halogen darstellt, oder
c) $R_{39}$, $R_{40}$ und $R_{41}$ einen Rest der Formel VII -$CH_2$-R darstellen, und $R_{42}$ und $R_{43}$ zusammen den Rest =N-$R_{33}$ bedeuten, oder

$R_{39}$, $R_{40}$, $R_{41}$ und $R_{42}$ je einen Rest der Formel VII -$CH_2$-R darstellen und $R_{43}$ unsubstituiertes oder substituiertes Cyclopentadienyl, $R_{32}$-O- oder Halogen bedeutet, wobei R, $R_{32}$ und $R_{33}$ die in Anspruch 17 angegebenen Bedeutungen haben.

**20.** Verfahren gemäss Anspruch 1, dadurch gekennzeichnet, dass man Niob(V)- und Tantal(V)verbindungen der Formeln IX, IXa oder IXb verwendet,

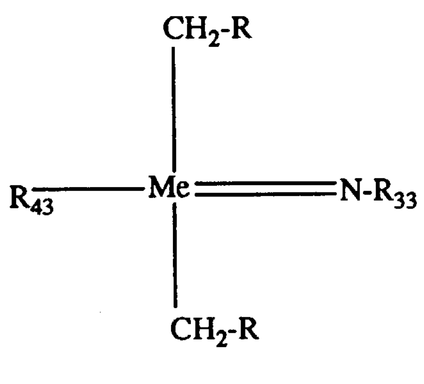

(IX),

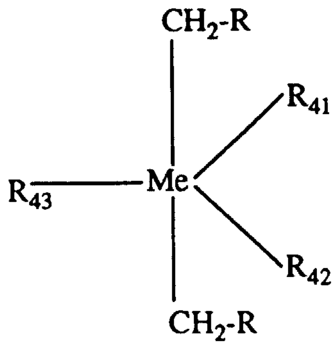

(IXa),

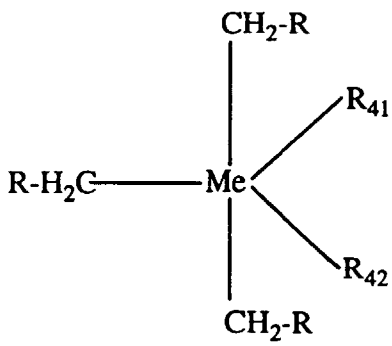

(IXb),

worin

Me für Nb(V) oder Ta(V) steht,
R H, $-C(CH_3)_3$, $-C(CH_3)_2-C_6H_5$, $-C_6H_5$ oder $-Si(C_1-C_4\text{-Alkyl})_3$ darstellt,
$R_{33}$ Phenyl oder mit 1 bis 3 $C_1$-$C_4$-Alkyl oder $C_1$-$C_4$-Alkoxy substituiertes Phenyl bedeutet,
$R_{43}$ in Formel IX die Gruppe $-CH_2-R$ oder F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;
$R_{41}$, $R_{42}$ und $R_{43}$ in Formel IXa unabhängig voneinander F, Cl, Br, unsubstituiertes oder mit Fluor substituiertes lineares oder verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl bedeuten; und
$R_{41}$ und $R_{42}$ in Formel IXb F, Cl, Br, unsubstituiertes oder mit Fluor substituiertes lineares oder verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellen.

**21.** Verfahren gemäss Anspruch 1, dadurch gekennzeichnet, dass man Niob(V)- und Tantal(V)verbindungen der Formeln
$Me[CH_2Si(CH_3)_3]_5$, $Cp_2Me[(CH_2C(CH_3)_2-C_6H_5)]_3$, $Me(=N\text{-}2,6\text{-dimethyl}C_6H_3)(CH_3)_3$, $Me(=N-C_6H_5)[OC(CH_3)_3][(CH_2Si(CH_3)_3)]_2$, $Me(=N\text{-}2,6\text{-diisopropyl}C_6H_3)[(CH_2-C_6H_5)]_3$, $Me(=N-C_6H_5)[OCCH_3(CF_3)_2][(CH_2Si(CH_3)_3)]_2$, $CpMe[OCCH_3(CF_3)_2]_2[(CH_2-C_6H_5)]_2$, $Me(=N\text{-}2,6\text{-diisopropyl}C_6H_3)[(CH_2C(CH_3)_2-C_6H_5)]_2Cl$, $Cp_2Me(CH_3)_2[OCH(CH_3)_2]$, $Me(=N\text{-}2,6\text{-dimethyl}C_6H_3)[(CH_2-C_6H_5)]_3$, $CpMe[OCH(CH_3)_2]_2[(CH_2Si(CH_3)_3)]_2$, $Cp_2Me[(CH_2-C_6H_5)]_3$, $Me[CH_2Si(CH_3)_3]_3Cl_2$, $Me[CH_2Si(CH_3)_3]_3[OCH_2C(CH_3)_3]_2$, $Cp_2Me[3,5\text{-dimethyl}C_6H_3O)][(CH_2Si(CH_3)_3)]_2$, Me(2,6-Diisopropylphenyloxy)$_2(CH_3)_3$, $Cp_2Me(CH_3)_3$, Me(2,6-Dimethylphenyloxy)$_2(CH_3)_3$, $Me[CH_2Si(CH_3)_3]_3[OCH(CH_3)]_2$, $CpMe[OC(CH_3)_3]_2[(CH_2-C_6H_5)]_2$ oder $Cp_2Me[(CH_2Si(CH_3)_3)]_3$ verwendet, wobei Cp Cyclopentadienyl und Me Nb(V) oder Ta(V)) bedeutet.

**22.** Verfahren zur photokatalytisch induzierten und nachfolgenden thermischen Polymerisation eines cyclischen Olefins oder mindestens zwei verschiedener cyclischer Olefine in Gegenwart einer Metallverbindung als Katalysator, dadurch gekennzeichnet, dass man a) eine photochemische Ringöffnungs-Metathese-Polymerisation durchführt, indem man zunächst die Cycloolefine in Gegenwart einer katalytischen Menge mindestens einer thermostabilen

Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, bestrahlt; oder eine katalytische Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, gegebenenfalls in einem inerten Lösungsmittel bestrahlt und dann mit mindestens einem Cycloolefin vermischt; und
b) dann die Polymerisation durch Erhitzen und ohne Bestrahlung beendet.

**23.** Verfahren gemäss Anspruch 1, dadurch gekennzeichnet, dass die Niob(V)- und Tantal(VI)verbindungen in einer Menge von 0,001 bis 20 Mol-% eingesetzt werden, bezogen auf die Menge des Cycloolefins.

**24.** Zusammensetzung, enthaltend (a) ein cyclisches Olefin oder mindestens zwei verschiedene cyclische Olefine und (b) eine katalytisch wirksame Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält.

**25.** Beschichtetes Trägermaterial, dadurch gekennzeichnet, dass auf einem Träger eine Schicht aus (a) einem cyclischen Olefin oder mindestens zwei verschiedenen cyclischen Olefinen und (b) einer katalytisch wirksamen Menge mindestens einer thermostabilen Niob(V)- oder Tantal(V)verbindung, die mindestens zwei Methylgruppen oder zwei monosubstituierte Methylgruppen am Metall gebunden enthält, wobei der Substituent kein Wasserstoffatom in α-Stellung enthält, aufgebracht ist.

**26.** Verfahren zur Herstellung von beschichteten Materialien oder Reliefabbildungen auf Trägern, bei dem man eine Zusammensetzung gemäss Anspruch 24 aufbringt, gegebenenfalls das Lösungsmittel entfernt, und die Schicht zur Polymerisation bestrahlt und gegebenenfalls thermisch nachhärtet, oder die Schicht durch eine Photomaske bestrahlt, gegebenenfalls thermisch nachhärtet, und anschließend die nichtbestrahlten Anteile mit einem Lösungsmittel entfernt.

## Claims

**1.** A process for the photocatalytic polymerization of a cyclic olefin or at least two different cyclic olefins in the presence of a metal compound as catalyst, which comprises carrying out a photochemical ring-opening metathesis polymerization in the presence of a catalytic amount of at least one heat-stable niobium(V) or tantalum(V) compound which contains at least two methyl groups or two monosubstituted methyl groups bound to the metal, the substituent containing no hydrogen atom in the α-position.

**2.** A process according to claim 1, wherein the cyclic olefins are monocyclic rings or polycyclic, bridged or fused ring systems having 2 to 4 rings, which are unsubstituted or substituted and contain, if desired, one or more heteroatoms from the group consisting of O, S, N and Si in one or more rings, and, if desired, fused aromatic or heteroaromatic rings.

**3.** A process according to claim 2, wherein the cyclic rings contain 3 to 16 ring members.

**4.** A process according to claim 3, wherein the cyclic rings contain 3 to 12 ring members.

**5.** A process according to claim 2, wherein the cyclic olefins contain further non-aromatic double bonds.

**6.** A process according to claim 1, wherein the cycloolefins are those of the formula I

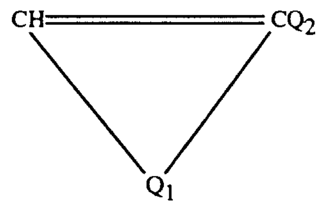

(I),

in which

| | |
|---|---|
| $Q_1$ | is a radical having at least one carbon atom which, together with the $-CH{=}CQ_2-$ group, forms an at least 3-membered alicyclic ring which contains, if desired, one or more heteroatoms chosen from the group consisting of silicon, phosphorus, oxygen, nitrogen and sulfur; and which is unsubstituted or substituted by halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$alkyl, $C_1$-$C_{20}$hydroxyalkyl $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or $-CO-NR_5-CO-$; or in which, if desired, an alicyclic, aromatic or heteroaromatic ring, which is unsubstituted or substituted by halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_{13}$-$X_1$-, is fused onto adjacent carbon atoms of the alicyclic ring; |
| X and $X_1$ | independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$; |
| $R_1$, $R_2$ and $R_3$ | independently of one another are $C_1$-$C_{12}$alkyl, $C_1$-$C_{12}$perfluoroalkyl, phenyl or benzyl; |
| $R_4$ and $R_{13}$ | independently of one another are $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl; |
| $R_5$ and $R_{10}$ | independently of one another are hydrogen, $C_1$-$C_{12}$alkyl, phenyl or benzyl, the alkyl groups in turn being unsubstituted or substituted by $C_1$-$C_{12}$alkoxy or $C_3$-$C_8$cycloalkyl; |
| $R_6$, $R_7$ and $R_8$ | independently of one another are $C_1$-$C_{12}$alkyl, $C_1$-$C_{12}$perfluoroalkyl, phenyl or benzyl; |
| M | is an alkali metal and $M_1$ is an alkaline earth metal; and |
| u | is 0 or 1; |

and in which the alicyclic ring formed with $Q_1$ contains, if desired, further non-aromatic double bonds;

| | |
|---|---|
| $Q_2$ | is hydrogen, $C_1$-$C_{20}$alkyl, $C_1$-$C_{20}$haloalkyl, $C_1$-$C_{12}$alkoxy, halogen, -CN or $R_{11}$-$X_2$-; |
| $R_{11}$ | is $C_1$-$C_{20}$alkyl, $C_1$-$C_{20}$haloalkyl, $C_1$-$C_{20}$hydroxyalkyl, $C_3$-$C_8$cycloalkyl, $C_6$-$C_{16}$aryl or $C_7$-$C_{16}$aralkyl; |
| $X_2$ | is -C(O)-O- or $-C(O)-NR_{12}-$; |
| $R_{12}$ | is hydrogen, $C_1$-$C_{12}$alkyl, phenyl or benzyl; |

and in which the abovementioned cycloalkyl, heterocycloalkyl, aryl, heteroaryl, aralkyl and heteroaralkyl groups are unsubstituted or substituted by $C_1$-$C_{12}$alkyl, $C_1$-$C_{12}$alkoxy, $-NO_2$, -CN or halogen, and in which the heteroatoms of the abovementioned heterocycloalkyl, heteroaryl and heteroaralkyl groups are chosen from the group consisting of -O-, -S-, $-NR_9-$ and -N=; and

$R_9$ is hydrogen, $C_1$-$C_{12}$alkyl, phenyl or benzyl.

**7.** A process according to claim 6, wherein the alicyclic ring which $Q_1$ forms together with the $-CH{=}CQ_2-$ group has 3 to 16 ring atoms, and wherein the ring is a monocyclic, bicyclic, tricyclic or tetracyclic ring system.

**8.** A process according to claim 6, wherein $Q_2$ in formula I is hydrogen.

**9.** A process according to claim 6, wherein, in the compounds of the formula I,

| | |
|---|---|
| $Q_1$ | is a radical having at least one carbon atom which, together with the $-CH{=}CQ_2-$ group, forms a |

| | |
|---|---|
| | 3- to 20-membered alicyclic ring which contains, if desired, one or more heteroatoms chosen from the group consisting of silicon, oxygen, nitrogen and sulfur; and which is unsubstituted or substituted by halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$alkyl, $C_1$-$C_{12}$haloalkyl, $C_1$-$C_{12}$hydroxyalkyl, $C_1$-$C_4$cyanoalkyl, $C_3$-$C_6$cycloalkyl, $C_6$-$C_{12}$aryl, $C_7$-$C_{12}$aralkyl, $C_3$-$C_6$heterocycloalkyl, $C_3$-$C_{12}$heteroaryl, $C_4$-$C_{12}$heteroaralkyl or $R_4$-X-; or in which two adjacent C atoms in this radical $Q_1$ are substituted by -CO-O-CO- or $-CO-NR_5-CO-$; or in which, if desired, an alicyclic, aromatic or heteroaromatic ring which is unsubstituted or substituted by halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$alkyl, $C_1$-$C_{12}$haloalkyl, $C_1$-$C_{12}$hydroxyalkyl, $C_1$-$C_4$cyanoalkyl, $C_3$-$C_6$cycloalkyl, $C_6$-$C_{12}$aryl, $C_7$-$C_{12}$aralkyl, $C_3$-$C_6$heterocycloalkyl, $C_3$-$C_{12}$heteroaryl, $C_4$-$C_{12}$heteroaralkyl or $R_{13}$-$X_1$- is fused onto adjacent carbon atoms; |
| X and $X_1$ | independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$; |
| $R_1$, $R_2$ and $R_3$ | independently of one another are $C_1$-$C_6$alkyl, $C_1$-$C_6$perfluoroalkyl, phenyl or benzyl; |
| M | is an alkali metal and $M_1$ is an alkaline earth metal; |
| $R_4$ and $R_{13}$ | independently of one another are $C_1$-$C_{12}$alkyl, $C_1$-$C_{12}$haloalkyl, $C_1$-$C_{12}$hydroxyalkyl, $C_3$-$C_8$cycloalkyl, $C_6$-$C_{12}$aryl or $C_7$-$C_{12}$aralkyl; |
| $R_8$ and $R_{10}$ | independently of one another are hydrogen, $C_1$-$C_6$alkyl, phenyl or benzyl, the alkyl groups in turn being unsubstituted or substituted by $C_1$-$C_6$alkoxy or $C_3$-$C_6$cycloalkyl; |
| $R_6$, $R_7$ and $R_8$ | independently of one another are $C_1$-$C_6$alkyl, $C_1$-$C_6$perfluoroalkyl, phenyl or benzyl; |
| u | is 0 or 1; |

and in which the alicyclic ring formed with $Q_1$ contains, if desired, further non-aromatic double bonds;

| | |
|---|---|
| $Q_2$ | is hydrogen, $C_1$-$C_{12}$alkyl, $C_1$-$C_{12}$haloalkyl, $C_1$-$C_6$alkoxy, halogen, -CN or $R_{11}$-$X_2$-; |
| $R_{11}$ | is $C_1$-$C_{12}$alkyl, $C_1$-$C_{12}$haloalkyl, $C_1$-$C_{12}$hydroxyalkyl, $C_3$-$C_6$cycloalkyl, $C_6$-$C_{12}$aryl or $C_7$-$C_{12}$aralkyl; |
| $X_2$ | is -C(O)-O- or $-C(O)-NR_{12}-$; and |
| $R_{12}$ | is hydrogen, $C_1$-$C_6$alkyl, phenyl or benzyl; |

in which the cycloalkyl, heterocycloalkyl, aryl, heteroaryl, aralkyl and heteroaralkyl groups are unsubstituted or substituted by $C_1$-$C_6$alkyl, $C_1$-$C_6$alkoxy, $-NO_2$, -CN or halogen, and in which the heteroatoms of the heterocycloalkyl, heteroaryl and heteroaralkyl groups are chosen from the group consisting of -O-, -S-, $-NR_9-$ and -N=; and

$R_9$ is hydrogen, $C_1$-$C_6$alkyl, phenyl or benzyl.

**10.** A process according to claim 6, wherein, in the compounds of the formula I,

| | |
|---|---|
| $Q_1$ | is a radical having at least one carbon atom which, together with the $-CH=CQ_2-$ group, forms a 3- to 10-membered alicyclic ring which contains, if desired, a heteroatom chosen from the group consisting of silicon, oxygen, nitrogen and sulfur and which is unsubstituted or substituted by halogen, -CN, $-NO_2$, $R_1R_2R_3Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_4$-X-; or in which, if desired, an alicyclic, aromatic or heteroaromatic ring which is unsubstituted or substituted by halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_{13}$-$X_1$-is fused onto adjacent carbon atoms; |
| $R_1$, $R_2$ and $R_3$ | independently of one another are $C_1$-$C_4$alkyl, $C_1$-$C_4$perfluoroalkyl, phenyl or benzyl; |
| M | is an alkali metal and $M_1$ is an alkaline earth metal; |
| $R_4$ and $R_{13}$ | independently of one another are $C_1$-$C_6$alkyl, $C_1$-$C_6$haloalkyl, $C_1$-$C_6$hydroxyalkyl or $C_3$-$C_6$cycloalkyl; |
| X and $X_1$ | independently of one another are -O-, -S-, -CO-, -SO- or $-SO_2-$; |
| $R_6$, $R_7$ and $R_8$ | independently of one another are $C_1$-$C_4$alkyl, $C_1$-$C_4$perfluoroalkyl, phenyl or benzyl; |

and $Q_2$ is hydrogen.

**11.** A process according to claim 1, wherein the cyclic olefins are norbornene or norbornene derivatives.

**12.** A process according to claim 11, wherein the norbornene derivatives are those of the formula II

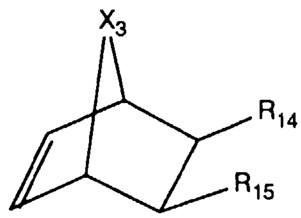

(II),

in which

| | |
|---|---|
| $X_3$ | is $-CHR_{16}-$, oxygen or sulfur; |
| $R_{14}$ and $R_{15}$ | independently of one another are hydrogen, -CN, trifluoromethyl, $(CH_3)_3Si-O-$, $(CH_3)_3Si-$ or $-COOR_{17}$; and |
| $R_{16}$ and $R_{17}$ | independently of one another are hydrogen, $C_1$-$C_{12}$alkyl, phenyl or benzyl; |

or
those of the formula III

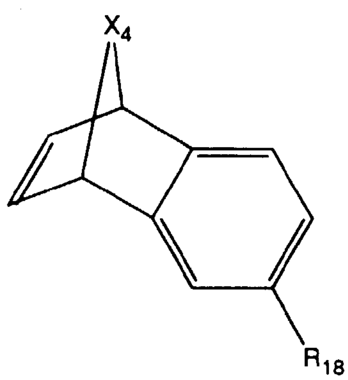

(III),

in which

| | |
|---|---|
| $X_4$ | is $-CHR_{19}-$, oxygen or sulfur; |
| $R_{19}$ | is hydrogen, $C_1$-$C_{12}$alkyl, phenyl or benzyl; and |
| $R_{18}$ | is hydrogen, $C_1$-$C_6$alkyl or halogen; |

or
those of the formula IV

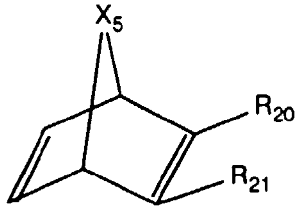

(IV),

in which

$X_5$ is $-CHR_{22}-$, oxygen or sulfur;
$R_{22}$ is hydrogen, $C_1$-$C_{12}$alkyl, phenyl or benzyl;
$R_{20}$ and $R_{21}$ independently of one another are hydrogen, CN, trifluoromethyl, $(CH_3)_3Si$-O-, $(CH_3)_3Si$- or $-COOR_{23}$; and
$R_{23}$ is hydrogen, $C_1$-$C_{12}$alkyl, phenyl or benzyl;

or
those of the formula V

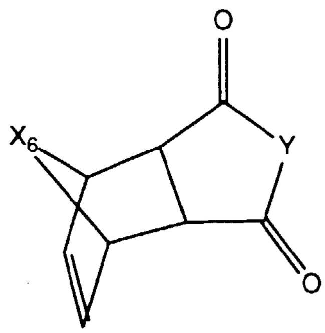

(V),

in which

$X_6$ is $-CHR_{24}-$, oxygen or sulfur;
$R_{24}$ is hydrogen, $C_1$-$C_{12}$alkyl, phenyl or benzyl;
Y is oxygen or $>N-R_{25}$; and
$R_{25}$ is hydrogen, methyl, ethyl or phenyl.

**13.** A process according to claim 1, wherein the methyl group or monosubstituted methyl group bound to the metal atom is bonded twice or three times as a ligand.

**14.** A process according to claim 1, wherein the methyl group or monosubstituted methyl group bound to the metal atom corresponds to the formula VII

$$-CH_2-R \qquad (VII),$$

in which

R is H, $-CF_3$, $-CR_{26}R_{27}R_{28}$, $-SiR_{29}R_{30}R_{31}$, $C_6$-$C_{16}$aryl which is unsubstituted or substituted by $C_1$-$C_6$alkyl or $C_1$-$C_6$alkoxy, or $C_4$-$C_{15}$heteroaryl which has 1 to 3 heteroatoms from the group consisting of O, S and N, and $R_{26}$, $R_{27}$ and $R_{28}$ independently of one another are $C_1$-$C_{10}$alkyl, which is unsubstituted or substituted by $C_1$-$C_{10}$alkoxy, or $R_{26}$ and $R_{27}$ have this meaning and $R_{28}$ is $C_6$-$C_{10}$aryl or $C_4$-$C_9$heteroaryl, which is unsubstituted or substituted by $C_1$-$C_6$alkyl or $C_1$-$C_6$alkoxy; and
$R_{29}$, $R_{30}$ and $R_{31}$ independently of one another are $C_1$-$C_6$alkyl, $C_5$- or $C_6$-cycloalkyl, or phenyl or benzyl which is unsubstituted or substituted by $C_1$-$C_6$alkyl or $C_1$-$C_6$alkoxy.

**15.** A process according to claim 14, wherein the group R in formula VII is H, $-C(CH_3)_3$, $-C(CH_3)_2C_6H_5$, phenyl which is unsubstituted or substituted by methyl, ethyl, methoxy or ethoxy, $-CF_3$, or $-Si(CH_3)_3$.

**16.** A process according to claim 1, wherein the other 1 to 3 valencies of the Nb(V) and Ta(V) atoms are saturated with identical or different ligands from the group consisting of =O, $=N-R_{33}$, secondary amines having 2 to 18 C atoms, $R_{32}O$-, $R_{32}S$-, halogen, cyclopentadienyl, bridged biscyclopentadienyl, tridentate monoanionic ligands and neutral ligands, in which the $R_{32}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-

$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$-alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$-alkyl or halogen; and $R_{33}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$-alkyl or halogen.

**17.** A process according to claim 1, wherein the niobium and tantalum compounds have the formula VIII

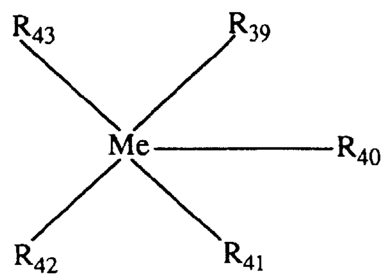

(VIII),

in which

Me is Nb(V) or Ta(V),
at least two of the radicals $R_{39}$ to $R_{43}$ are a radical -$CH_2$-R of the formula VII, in which R is H, -$CF_3$, -$CR_{26}R_{27}R_{28}$, -$SiR_{29}R_{30}R_{31}$, $C_6$-$C_{16}$aryl which is unsubstituted or substituted by $C_1$-$C_6$alkyl or $C_1$-$C_6$alkoxy, or $C_4$-$C_{15}$heteroaryl with 1 to 3 heteroatoms from the group consisting of O, S and N;
$R_{26}$, $R_{27}$ and $R_{28}$ independently of one another are $C_1$-$C_{10}$alkyl, which is unsubstituted or substituted by $C_1$-$C_{10}$alkoxy, or $R_{26}$ and $R_{27}$ have this meaning and $R_{28}$ is $C_6$-$C_{10}$aryl or $C_4$-$C_9$heteroaryl, which is unsubstituted or substituted by $C_1$-$C_6$alkyl or $C_1$-$C_6$alkoxy; and
$R_{29}$, $R_{30}$ and $R_{31}$ independently of one another are $C_1$-$C_6$alkyl, $C_5$- or $C_6$cycloalkyl, or phenyl or benzyl which is unsubstituted or substituted by $C_1$-$C_6$alkyl or $C_1$-$C_6$alkoxy;
two of the other radicals of $R_{39}$ to $R_{43}$ together are =0 or =N-$R_{33}$, and $R_{33}$ is linear or branched $C_1$-$C_{18}$alkyl which is unsubstituted or substituted by $C_1$-$C_6$alkoxy, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino,
di($C_1$-$C_6$alkyl)amino-$C_1$-$C_3$alkyl or halogen; and/or
the other radicals of $R_{39}$ to $R_{43}$ independently of one another are secondary amino having 2 to 18 C atoms, $R_{32}$O- or $R_{32}$S-, halogen, cyclopentadienyl or bridged biscyclopentadienyl or a neutral ligand, in which the $R_{32}$ independently of one another are linear or branched $C_1$-$C_{18}$alkyl which is unsubstituted or substituted by $C_1$-$C_6$alkoxy or halogen, $C_5$- or $C_6$cycloalkyl which is unsubstituted or substituted by $C_1$-$C_6$alkyl, $C_1$-$C_6$alkoxy or halogen, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or benzyl or phenylethyl which is unsubstituted or substituted by $C_1$-$C_6$alkyl, $C_1$-$C_6$alkoxy, $C_1$-$C_6$alkoxymethyl, $C_1$-$C_6$alkoxyethyl, di ($C_1$-$C_6$alkyl)amino, di($C_1$-$C_6$alkyl)amino-$C_1$-$C_3$alkyl or halogen.

**18.** A process according to claim 17, wherein two or three of the radicals $R_{39}$ to $R_{43}$ are a radical -$CH_2$R of the formula VII.

**19.** A process according to claim 1, wherein niobium and tantalum compounds of the formula VIII in which

a) $R_{39}$ to $R_{43}$ are each a radical of the formula VII -$CH_2$-R, or
b) $R_{39}$ and $R_{40}$ are each a radical of the formula VII -$CH_2$-R, $R_{41}$ and $R_{42}$ together are the radical =N-$R_{33}$ and

$R_{43}$ is unsubstituted or substituted cyclopentadienyl, $R_{32}$-O- or halogen, or
c) $R_{39}$, $R_{40}$ and $R_{41}$ are each a radical of the formula VII $-CH_2-R$ and $R_{42}$ and $R_{43}$ together are the radical $=N-R_{33}$, or

$R_{39}$, $R_{40}$, $R_{41}$ and $R_{42}$ are each a radical of the formula VII $-CH_2-R$ and $R_{43}$ is unsubstituted or substituted cyclopentadienyl, $R_{32}$-O- or halogen,
in which R, $R_{32}$ and $R_{33}$ are as defined in claim 17, are used.

**20.** A process according to claim 1, wherein niobium(V) and tantalum(V) compounds of the formulae IX, IXa or IXb

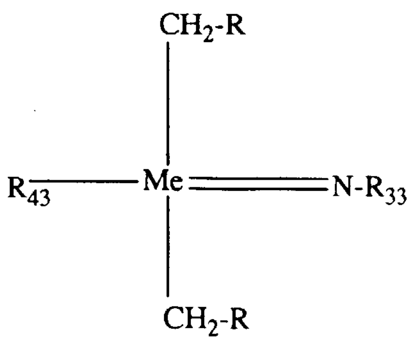

(IX),

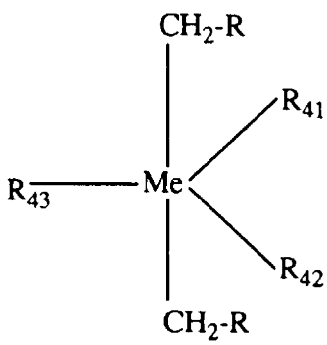

(IXa),

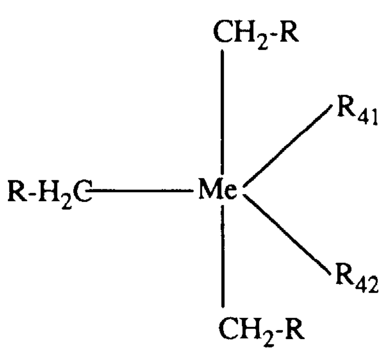

(IXb),

in which

Me is Nb(V) or Ta(V),
R is H, $-C(CH_3)_3$, $-C(CH_3)_2-C_6H_5$, $-C_6H_5$ or $-Si(C_1-C_4alkyl)_3$,
$R_{33}$ is phenyl or phenyl which is substituted by 1 to 3 $C_1-C_4$alkyl or $C_1-C_4$alkoxy, $R_{43}$ in formula IX is the group

$-CH_2-R$ or F, Cl, Br, linear or, in particular, branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl;

$R_{41}$, $R_{42}$ and $R_{43}$ in formula IXa independently of one another are F, Cl, Br, linear or branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl; and

$R_{41}$ and $R_{42}$ in formula IXb are F, Cl, Br, linear or branched $C_1$-$C_4$alkoxy which is unsubstituted or substituted by fluorine, phenyloxy which is unsubstituted or substituted by $C_1$-$C_4$alkyl or $C_1$-$C_4$alkoxy, or cyclopentadienyl which is unsubstituted or substituted by $C_1$-$C_4$alkyl,

are used.

**21.** A process according to claim 1, wherein niobium(V) and tantalum(V) compounds of the formulae $Me[CH_2Si(CH_3)_3]_5$, $Cp_2Me[(CH_2C(CH_3)_2-C_6H_5)]_3$, Me(=N-2,6-dimethyl$C_6H_3$)$(CH_3)_3$, Me(=N-$C_6H_5$)$[OC(CH_3)_3][(CH_2Si(CH_3)_3)]_2$, Me(=N-2,6-diisopropyl$C_6H_3$)$[(CH_2-C_6H_5)]_3$, Me(=N-$C_6H_5$)$[OCCH_3(CF_3)_2][(CH_2Si(CH_3)_3)]_2$, $CpMe[OCCH_3(CF_3)_2]_2[(CH_2-C_6H_5)]_2$, Me(=N-2,6-diisopropyl$C_6H_3$)$[(CH_2C(CH_3)_2-C_6H_5)]_2Cl$, $Cp_2Me(CH_3)_2[OCH(CH_3)_2]$, Me(=N-2,6-dimethyl$C_6H_3$)$[(CH_2-C_6H_5)]_3$, $CpMe[OCH(CH_3)_2]_2[(CH_2Si(CH_3)_3)]_2$, $Cp_2Me[(CH_2-C_6H_5)]_3$, $Me[CH_2Si(CH_3)_3]_3Cl_2$, $Me[CH_2Si(CH_3)_3]_3[OCH_2C(CH_3)_3]_2$, $Cp_2Me$[3,5-dimethyl$C_6H_3O$)] $[(CH_2Si(CH_3)_3)]_2$, Me (2,6-diisopropylphenyloxy)$_2(CH_3)_3$, $Cp_2Me(CH_3)_3$, Me(2,6-dimethylphenyloxy)$_2(CH_3)_3$, $Me[CH_2Si(CH_3)_3]_3[OCH(CH_3)]_2$, $CpMe[OC(CH_3)_3]_2[(CH_2-C_6H_5)]_2$ or $Cp_2Me[(CH_2Si(CH_3)_3)]_3$, in which Cp is cyclopentadienyl and Me is Nb(V) or Ta(V)), are used.

**22.** A process for the photocatalytically induced and subsequent thermal polymerization of a cyclic olefin or at least two different cyclic olefins in the presence of a metal compound as the catalyst, which comprises a) carrying out a photochemical ring-opening metathesis polymerization by initially irradiating the cycloolefins in the presence of a catalytic amount of at least one heat-stable niobium(V) or tantalum (V) compound which contains at least two methyl groups or two monosubstituted methyl groups bound to the metal, the substituent containing no hydrogen atom in the α-position; or irradiating a catalytic amount of at least one heat-stable niobium(V) or tantalum(V) compound which contains at least two methyl groups or two monosubstituted methyl groups bound to the metal, the substituent containing no hydrogen atom in the α-position, if appropriate in an inert solvent, and then mixing this with at least one cycloolefin; and b) then ending the polymerization by heating and without irradiation.

**23.** A process according to claim 1, wherein the niobium(V) and tantalum(V) compounds are employed in an amount of 0.001 to 20 mol%, based on the amount of the cycloolefin.

**24.** A composition comprising (a) a cyclic olefin or at least two different cyclic olefins and (b) a catalytically active amount of at least one heat-stable niobium(V) or tantalum(V) compound which contains at least two methyl groups or two monosubstituted methyl groups bound to the metal, the substituent containing no hydrogen atom in the α-position.

**25.** A coated carrier material, wherein a layer of (a) a cyclic olefin or at least two different cyclic olefins and (b) a catalytically active amount of at least one heat-stable niobium(V) or tantalum(V) compound which contains at least two methyl groups or two monosubstituted methyl groups bound to the metal, the substituent containing no hydrogen atom in the α-position, is applied to a carrier.

**26.** A process for the preparation of a coated material or relief image on carriers, in which a composition according to claim 24 is applied, the solvent is removed, if appropriate, and the layer is irradiated, for polymerization, and, if appropriate, after-cured by means of heat, or the layer is irradiated through a photomask and, if appropriate, after-cured by means of heat and the non-irradiated portions are then removed with a solvent.

## Revendications

**1.** Procédé de polymérisation photocatalytique d'une oléfine cyclique ou au moins deux oléfines cycliques différentes en présence d'un composé métallique en tant que catalyseur, caractérisé en ce que l'on met en oeuvre une polymérisation par métathèse décyclisante photochimique en présence d'une quantité catalytique d'au moins un composé stable à la chaleur de niobium(V) ou de tantale(V), comportant au moins deux groupes méthyle ou deux groupes méthyle monosubstitués liés au métal, le substituant ne comportant pas d'atome d'hydrogène en position

α.

**2.** Procédé selon la revendication 1, caractérisé en ce que dans le cas des oléfines cycliques, il s'agit de cycles monocycliques ou de systèmes cycliques polycycliques, pontés ou condensés avec 2 à 4 cycles, qui sont non substitués ou substitués et qui contiennent éventuellement un ou plusieurs hétéroatomes pris parmi les atomes de O, S, N et Si dans un ou plusieurs cycles et des cycles aromatiques ou hétéroaromatiques éventuellement condensés.

**3.** Procédé selon la revendication 2, caractérisé en ce que les cycles cycliques contiennent de 3 à 16 chaînons.

**4.** Procédé selon la revendication 3, caractérisé en ce que les cycles cycliques contiennent de 3 à 12 chaînons.

**5.** Procédé selon la revendication 2, caractérisé en ce que les oléfines cycliques contiennent d'autres doubles liaisons non aromatiques.

**6.** Procédé selon la revendication 1, caractérisé en ce que les cyclooléfines répondent à la formule 1

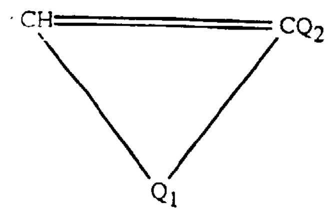

(I)

dans laquelle

| | |
|---|---|
| $Q_1$ | représente un reste avec au moins un atome de carbone, qui forme conjointement avec le groupe $-CH=CQ_2-$ un cycle alicyclique avec au moins 3 chaînons, comportant éventuellement un ou plusieurs hétéroatomes pris parmi le silicium, le phosphore, l'oxygène, l'azote et le soufre ; et lequel est non substitué ou substitué par un atome d'halogène, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_4$-X ; ou dans lequel deux atomes de carbone adjacents sont substitués par -CO-O-CO- ou $-CO-NR_5-CO-$ ; ou dans lequel, sur les atomes de carbone adjacents du cycle alicyclique, est éventuellement condensé un cycle alicyclique, aromatique ou hétéroaromatique qui est non substitué ou substitué par un atome d'halogène, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}$-$X_1$ ; |
| X et $X_1$, | indépendamment l'un de l'autre, représentent -O-, -S-, -CO-, -SO-, $-SO_2-$, -O-C(O)-, -C(O)-O-, $-C(O)-NR_5-$, $-NR_{10}-C(O)-$, $-SO_2-O-$ ou $-O-SO_2-$ ; |
| $R_1$, $R_2$ et $R_3$, | indépendamment l'un de l'autre, représentent des groupes alkyle en $C_1$-$C_{12}$, perfluoroalkyle en $C_1$-$C_{12}$, phényle ou benzyle ; |
| $R_4$ et $R_{13}$, | indépendamment l'un de l'autre, représentent des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$ ; |
| $R_5$ et $R_{10}$, | indépendamment l'un de l'autre, représentent un atome d'hydrogène, un groupe alkyle en $C_1$-$C_{12}$, phényle ou benzyle, les groupes alkyle, de leur côté, étant non substitués ou substitués par des groupes alkoxy en $C_1$-$C_{12}$ ou cycloalkyle en $C_3$-$C_8$ ; |
| $R_6$, $R_7$ et $R_8$, | indépendamment l'un de l'autre, représentent des groupes alkyle en $C_1$-$C_{12}$, perfluoroalkyle en $C_1$-$C_{12}$, phényle ou benzyle ; |
| M | représente un atome de métal alcalin et $M_1$ un atome de métal alcalino-terreux ; et |
| u | vaut 0 ou 1 ; |

le cycle alicyclique formé avec $Q_1$ comportant éventuellement d'autres doubles liaisons non aromatiques ;

$Q_2$ représente un atome d'hydrogène, des groupes alkyle en $C_1$-$C_{20}$, halogénoalkyle en $C_1$-$C_{20}$, alkoxy en $C_1$-$C_{12}$, halogène, -CN, $R_{11}$-$X_2$- ;
$R_{11}$ représente des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralalkyle en $C_7$-$C_{16}$ ;
$X_2$ représente -C(O)-O- ou -C(O)-$NR_{12}$- ;
$R_{12}$ représente un atome d'hydrogène, des groupes alkyle en $C_1$-$C_{12}$, phényle ou benzyle ;

les groupes cycloalkyle, hétérocycloalkyle, aryle, hétéroaryle, aralkyle et hétéroaralkyle précités étant non substitués ou substitués par des groupes alkyle en $C_1$-$C_{12}$, alkoxy en $C_1$-$C_{12}$, -$NO_2$, -CN ou halogène, et les hétéroatomes des groupes hétérocycloalkyle, hétéroaryle et hétéroaralkyle précités étant choisis parmi -O-, -S-, -$NR_9$- et N= ; et

$R_9$ représente un atome d'hydrogène, des groupes alkyle en $C_1$-$C_{12}$, phényle ou benzyle.

**7.** Procédé selon la revendication 6, caractérisé en ce que le cycle alicyclique formé par le groupe -CH=$CQ_2$ avec $Q_1$, présente 3 à 16 atomes de cycle et où il s'agit d'un système cyclique monocyclique, bicyclique, tricyclique ou tétracyclique.

**8.** Procédé selon la revendication 6, caractérisé en ce que $Q_2$ dans la formule 1 représente un atome d'hydrogène.

**9.** Procédé selon la revendication 6, caractérisé en ce que dans les composés de formule I

$Q_1$ représente un reste avec au moins un atome de carbone, qui forme conjointement avec le groupe -CH=$CQ_2$- un cycle alicyclique à 3 à 20 chaînons, lequel contient éventuellement un ou plusieurs hétéroatomes pris parmi le silicium, l'oxygène, l'azote et le soufre ; et lequel est non substitué ou substitué par un atome d'halogène, =O, -CN, -$NO_2$, $R_1R_2R_3Si$-, -COOM, -$SO_3M$, -$PO_3M$, -COO$(M_1)_{1/2}$, -$SO_3(M_1)_{1/2}$, -$PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétérocycloalkyle en $C_3$-$C_6$, hétéroaryle en $C_3$-$C_{12}$, hétéroaralkyle en $C_4$-$C_{12}$ ou $R_{13}$-$X_1$ ; ou dans ce reste, deux atomes de carbone adjacents sont substitués par -CO-O-CO- ou -CO-$NR_5$-CO- ; ou dans lequel, sur les atomes de carbone adjacents, est éventuellement condensé un cycle alicyclique, aromatique ou hétéroaromatique qui est non substitué ou substitué par un atome d'halogène, -CN, -$NO_2$, $R_6R_7R_8Si$-, -COOM, -$SO_3M$, -$PO_3M$, -COO$(M_1)_{1/2}$, -$SO_3(M_1)_{1/2}$, -$PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétérocycloalkyle en $C_3$-$C_6$, hétéroaryle en $C_3$-$C_{12}$, hétéroaralkyle en $C_4$-$C_{12}$ ou $R_{13}$-$X_1$ ;
X et $X_1$, indépendamment l'un de l'autre, représentent -O-, -S-, -CO-, -SO-, -$SO_2$-, -O-C(O)-, -C(O)-O-, -C(O)-$NR_5$-, -$NR_{10}$-C(O)-, -$SO_2$-O- ou -O-$SO_2$- ;
$R_1$, $R_2$ et $R_3$, indépendamment les uns des autres, représentent des groupes alkyle en $C_1$-$C_6$, perfluoroalkyle en $C_1$-$C_6$, phényle ou benzyle ;
M représente un atome de métal alkalin et $M_1$ un atome de métal alkalino-terreux ; et
$R_4$ et $R_{13}$, indépendamment l'un de l'autre, représentent des groupes alkyle en $C_1$-$C_{12}$, halogénoalkyle en $C_1$-$C_{12}$, hydroxyalkyle en $C_1$-$C_{12}$, cycloalkyle en $C_3$-$C_8$, aryle en $C_6$-$C_{12}$, aralkyle en $C_7$-$C_{12}$ ;
$R_5$ et $R_{10}$, indépendamment l'un de l'autre, représentent un atome d'hydrogène, des groupes alkyle en $C_1$-$C_6$, phényle ou benzyle, les groupes alkyle, de leur côté, étant non substitués ou substitués par des groupes alkoxy en $C_1$-$C_6$ ou cycloalkyle en $C_3$-$C_6$ ;
$R_6$, $R_7$ et $R_8$, indépendamment les uns des autres, représentent des groupes alkyle en $C_1$-$C_6$, perfluoroalkyle en $C_1$-$C_6$, phényle ou benzyle ;
u vaut 0 ou 1 ;

le cycle alicyclique formé avec $Q_1$ pouvant éventuellement contenir d'autres doubles liaisons non aromatiques ;

$Q_2$ représente un atome d'hydrogène, des groupes alkyle en $C_1$-$C_{12}$, halogénoalkyle en $C_1$-$C_{12}$, alkoxy en $C_1$-$C_6$, halogène, -CN, $R_{11}$-$X_2$- ;
$R_{11}$ représente des groupes alkyle en $C_1$-$C_{12}$, halogénoalkyle en $C_1$-$C_{12}$, hydroxyalkyle en $C_1$-$C_{12}$, cycloalkyle en $C_3$-$C_6$, aryle en $C_6$-$C_{12}$ ou aralalkyle en $C_7$-$C_{12}$ ;

$X_2$ représente -C(O)-O- ou -C(O)-$NR_{12}$- ; et
$R_{12}$ représente un atome d'hydrogène, des groupes alkyle en $C_1$-$C_6$, phényle ou benzyle ;

les groupes cycloalkyle, hétérocycloalkyle, aryle, hétéroaryle, aralkyle et hétéroaralkyle précités étant non substitués ou substitués par des groupes alkyle en $C_1$-$C_6$, alkoxy en $C_1$-$C_6$, -$NO_2$, -CN ou halogène, et les hétéroatomes des groupes hétérocycloalkyle, hétéroaryle et hétéroaralkyle étant pris parmi -O-, -S-, -$NR_9$- et N= ; et

$R_9$ représente un atome d'hydrogène, des groupes alkyle en $C_1$-$C_6$, phényle ou benzyle.

**10.** Procédé selon la revendication 6, caractérisé en ce que dans les composés de formule I

$Q_1$ représente un reste avec au moins un atome de carbone, qui forme ensemble avec le groupe -CH=$CQ_2$- un cycle alicyclique à 3 à 10 chaînons, lequel contient éventuellement un hétéroatome pris parmi les atomes de silicium, d'oxygène, d'azote et de soufre, et qui est non substitué ou substitué par des atomes d'halogène, -CN, -$NO_2$, $R_1R_2R_3Si$-, -COOM, -$SO_3M$, -$PO_3M$, -COO$(M_1)_{1/2}$, -$SO_3(M_1)_{1/2}$, -$PO_3(M_1)_{1/2}$, des groupes alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_4$-X ; ou dans lesquels, sur les atomes de carbone adjacents, est condensé éventuellement un cycle alicyclique, aromatique ou hétéroaromatique, lequel est non substitué ou substitué par des atomes d'halogène, -CN, -$NO_2$, $R_6R_7R_8Si$-, -COOM, -$SO_3M$, -$PO_3M$, -COO$(M_1)_{1/2}$, -$SO_3(M_1)_{1/2}$, -$PO_3(M_1)_{1/2}$, des groupes alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_{13}$-$X_1$- ;
$R_1$, $R_2$ et $R_3$, indépendamment l'un de l'autre, représentent des groupes alkyle en $C_1$-$C_4$, perfluoroalkyle en $C_1$-$C_4$, phényle ou benzyle ;
M représente un atome de métal alcalin et $M_1$ un atome de métal alcalino-terreux ;
$R_4$ et $R_{13}$, indépendamment l'un de l'autre, représentent des groupes alkyle en $C_1$-$C_6$, halogénoalkyle en $C_1$-$C_6$, hydroxyalkyle en $C_1$-$C_6$ ou cycloalkyle en $C_3$-$C_6$ ;
X et $X_1$, indépendamment l'un de l'autre, représentent -O-, -S-, -CO-, -SO- ou -$SO_2$- ;
$R_6$, $R_7$ et $R_8$, indépendamment l'un de l'autre, représentent des groupes alkyle en $C_1$-$C_4$, perfluoroalkyle en $C_1$-$C_4$, phényle ou benzyle ;

et

$Q_2$ représente un atome d'hydrogène.

**11.** Procédé selon la revendication 1, caractérisé en ce que pour les oléfines cycliques, il s'agit du norbornène ou des dérivés de norbornène.

**12.** Procédé selon la revendication 11, caractérisé en ce que pour les dérivés de norbornène il s'agit de ceux qui répondent à la formule II

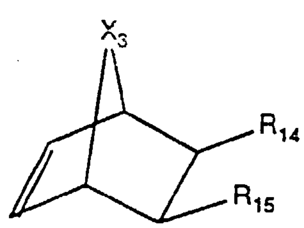

(II),

dans laquelle

$X_3$ représente -$CHR_{16}$-, un atome d'oxygène ou de soufre ;
$R_{14}$ et $R_{15}$, indépendamment l'un de l'autre, représentent un atome d'hydrogène, -CN, un groupe trifluorométhyle, $(CH_3)_3Si$-O-, $(CH_3)_3Si$- ou -$COOR_{17}$ ; et
$R_{16}$ et $R_{17}$, indépendamment l'un de l'autre, représentent un atome d'hydrogène, des groupes alkyle en $C_1$-$C_{12}$, phényle ou benzyle ;

soit à la formule III

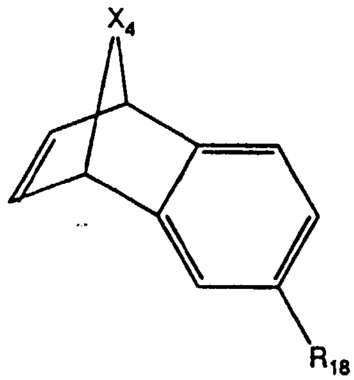

(III),

où

$X_4$ représente $-CHR_{19}-$, un atome d'oxygène ou de soufre ;
$R_{19}$ représente un atome d'hydrogène, des groupes alkyle en $C_1$-$C_{12}$, phényle ou benzyle ; et
$R_{18}$ représente un atome d'hydrogène, des groupes alkyle en $C_1$-$C_6$ ou des atomes d'halogène ;

ou à la formule IV

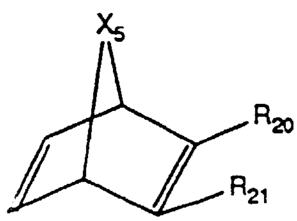

(IV),

où

$X_5$ représente $-CHR_{22}-$, des atomes d'oxygène ou de soufre ;
$R_{22}$ représente un atome d'hydrogène, des groupes alkyle en $C_1$-$C_{12}$, phényle ou benzyle ;
$R_{20}$ et $R_{21}$, indépendamment l'un de l'autre, représentent un atome d'hydrogène, -CN, un groupe trifluorométhyle, $(CH_3)_3Si-O-$, $(CH_3)_3Si-$ ou $-COOR_{23}$ ; et
$R_{23}$ représente un atome d'hydrogène, des groupes alkyle en $C_1$-$C_{12}$, phényle ou benzyle ;

ou à la formule V

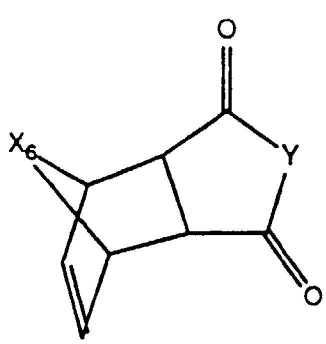

(V),

dans laquelle

$X_6$ représente $-CHR_{24}-$, des atomes d'oxygène ou de soufre ;
$R_{24}$ représente un atome d'hydrogène, des groupes alkyle en $C_1$-$C_{12}$, phényle ou benzyle ;
Y représente un atome d'oxygène ou >N-$R_{25}$ ; et
$R_{25}$ représente un atome d'hydrogène, des groupes méthyle, éthyle ou phényle.

**13.** Procédé selon la revendication 1, caractérisé en ce que le groupe méthyle ou le groupe méthyle monosubstitué liés à l'atome métallique est lié deux ou trois fois en tant que ligand.

**14.** Procédé selon la revendication 1, caractérisé en ce que le groupe méthyle ou le groupe méthyle monosubstitué et lié à l'atome de métal répond à la formule VII

$$-CH_2-R \qquad (VII),$$

dans laquelle

R représente un atome d'hydrogène, $-CF_3$, $-CR_{26}R_{27}R_{28}$, $-SiR_{29}R_{30}R_{31}$, hétéroaryle en $C_4$-$C_{15}$ avec 1 à 3 hétéroatomes pris parmi les atomes d'oxygène, de soufre et d'azote ou aryle en $C_6$-$C_{16}$ non substitué ou substitué par des groupes alkyle en $C_1$-$C_6$ ou alkoxy en $C_1$-$C_6$ ; et
$R_{26}$, $R_{27}$ et $R_{28}$, indépendamment l'un de l'autre, représentent un groupe alkyle en $C_1$-$C_{10}$ qui est non substitué ou substitué par un groupe alkoxy en $C_1$-$C_{10}$, ou $R_{26}$ et $R_{27}$ ont cette signification et $R_{28}$ représente un groupe hétéroaryle en $C_4$-$C_9$ ou aryle en $C_6$-$C_{10}$, qui est non substitué ou substitué par des groupes alkyle en $C_1$-$C_6$ ou alkoxy en $C_1$-$C_6$ ; et
$R_{29}$, $R_{30}$ et $R_{31}$, indépendamment l'un de l'autre, représentent un groupe alkyle en $C_1$-$C_6$ ou cycloalkyle en $C_5$ ou en $C_6$ ou benzyle ou phényle non substitué ou substitué par des groupes alkyle en $C_1$-$C_6$ ou alkoxy en $C_1$-$C_6$.

**15.** Procédé selon la revendication 14, caractérisé en ce que le groupe R dans la formule VII représente un atome d'hydrogène, $-C(CH_3)_3$, $-C(CH_3)_2-C_6H_5$, un groupe phényle non substitué ou substitué par méthyle, éthyle, méthoxy ou éthoxy, et représente également $-CF_3$ ou $-Si(CH_3)_3$.

**16.** Procédé selon la revendication 1, caractérisé en ce que les 1 à 3 autres valences du niobium et du tantale peuvent être saturées par des ligands identiques ou saturés pris parmi =0, =N-$R_{33}$, des amines secondaires avec 2 à 18 atomes de carbone, $R_{32}O$-, $R_{32}S$-, des atomes d'halogène, cyclopentadiényle, biscyclopentadiényle ponté, où R32, indépendamment, représentent un alkyle en $C_1$-$C_{18}$ linéaire ou ramifié, non substitué ou substitué par alkoxy en $C_1$-$C_6$ ou des atomes d'halogène, cycloalkyle en $C_5$ ou en $C_6$ non substitué ou substitué par des groupes alkyle en $C_1$-$C_6$, alkoxy en $C_1$-$C_6$ ou des atomes d'halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)-amino-(alkyle en $C_1$-$C_3$) ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle di(alkyl en $C_1$-$C_6$) amino, di(alkyl en $C_1$-$C_6$)-amino-(alkyle en $C_1$-$C_3$) ou halogène ; et $R_{33}$ représente un groupe alkyle en $C_1$-$C_{18}$ linéaire ou ramifié, non substitué ou substitué par un groupe alkoxy en $C_1$-$C_6$, un groupe cycloalkyle en $C_5$ ou en $C_6$ non substitué ou substitué par des groupes alkyle en $C_1$-$C_6$, alkoxy en $C_1$-$C_6$ ou halogène, un groupe phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)-amino-(alkyle en $C_1$-$C_3$) ou halogène, ou phényléthyle ou benzyle non substitué ou substitué par des groupes alkyle en $C_1$-$C_6$, alkoxy en $C_1$-$C_6$, (alkoxy en $C_1$-$C_6$)-méthyle, (alkoxy en $C_1$-$C_6$)éthyle, di(alkyl en $C_1$-$C_6$)amino, di(alkyl en $C_1$-$C_6$)-amino-(alkyle en $C_1$-$C_3$) ou halogène.

**17.** Procédé selon la revendication 1, caractérisé en ce que les composés de niobium et de tantale répondent à la formule VIII

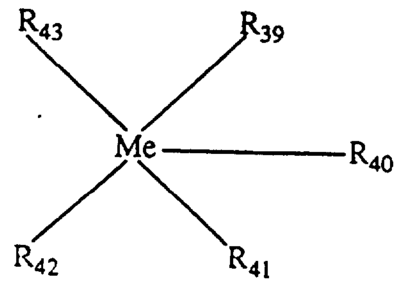

(VIII),

dans laquelle

Me représente Nb(V) ou Ta(V) ;

au moins deux, de préférence deux ou trois des restes $R_{39}$ à $R_{43}$ représentent un reste $-CH_2-R$ de formule VII, où R représente un atome d'hydrogène, $-CF_3$, $-CR_{26}R_{27}R_{28}$, $-SiR_{29}R_{30}R_{31}$, hétéroaryle en $C_4$-$C_{15}$ avec 1 à 3 hétéroatomes pris parmi les atomes d'oxygène, de soufre et d'azote ou aryle en $C_6$-$C_{16}$ non substitué ou substitué par des groupes alkyle en $C_1$-$C_6$ ou alkoxy en $C_1$-$C_6$ ;

| | |
|---|---|
| $R_{26}$, $R_{27}$ et $R_{28}$, | indépendamment l'un de l'autre, représentent un groupe alkyle en $C_1$-$C_{10}$, qui est non substitué ou substitué par alkoxy en $C_1$-$C_{10}$, ou $R_{26}$ et $R_{27}$ ont cette signification et $R_{28}$ représente un groupe hétéroaryle en $C_4$-$C_9$ ou aryle en $C_6$-$C_{10}$ qui est non substitué ou substitué par des groupes alkyle en $C_1$-$C_6$ ou alkoxy en $C_1$-$C_6$ ; et |
| $R_{29}$, $R_{30}$ et $R_{31}$, | indépendamment l'un de l'autre, représentent des groupes alkyle en $C_1$-$C_6$, cycloalkyle en $C_5$ ou en $C_6$ ou des groupes benzyle ou phényle non substitué ou substitué par des groupes alkyle en $C_1$-$C_6$ ou alkoxy en $C_1$-$C_6$ ; |

deux des autres restes $R_{39}$ à $R_{43}$ ensemble représentent à chaque fois =O ou $=N-R_{33}$, et $R_{33}$ représente un groupe alkyle en $C_1$-$C_{18}$ linéaire ou ramifié, non substitué ou substitué par un groupe alkoxy en $C_1$-$C_6$, un groupe cycloalkyle en $C_5$ ou en $C_6$ non substitué ou substitué par des groupes alkyle en $C_1$-$C_6$, alkoxy en $C_1$-$C_6$ ou halogène, ou phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)amino-(alkyle en $C_1$-$C_3$) ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)amino-(alkyle en $C_1$-$C_3$) ou halogène, et/ou

les autres restes $R_{39}$ à $R_{43}$, indépendamment l'un de l'autre, représentent des groupes amino secondaires avec 2 à 18 atomes de carbone, $R_{32}O$- ou $R_{32}S$-, des atomes d'halogène, cyclopentadiényle ou biscyclopentadiényle ponté ou un ligand neutre, où les restes $R_{32}$, indépendamment l'un de l'autre, représentent un groupe alkyle en $C_1$-$C_{18}$ linéaire ou ramifié, non substitué ou substitué par des groupes alkoxy en $C_1$-$C_6$ ou un atome d'halogène, un groupe cycloalkyle en $C_5$ ou en $C_6$ non substitué ou substitué par des groupes alkyle en $C_1$-$C_6$, alkoxy en $C_1$-$C_6$ ou des atomes d'halogène, un groupe phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$) amino-(alkyle en $C_1$-$C_3$) ou un atome d'halogène, ou phényléthyle ou benzyle non substitué ou substitué par des groupes alkyle en $C_1$-$C_6$, alkoxy en $C_1$-$C_6$, (alkoxy en $C_1$-$C_6$)-méthyle, (alkoxy en $C_1$-$C_6$)éthyle, di(alkyl en $C_1$-$C_6$) amino, di(alkyl en $C_1$-$C_6$)amino-(alkyle en $C_1$-$C_3$) ou un atome d'halogène.

**18.** Procédé selon la revendication 17, caractérisé en ce que deux ou trois des restes $R_{39}$ à $R_{43}$ représentent un reste $-CH_2R$ de formule VII.

**19.** Procédé selon la revendication 1, caractérisé en ce que l'on utilise des composés de niobium et de tantale de formule VIII, où

a) $R_{39}$ à R43 représentent chacun un reste de formule VII $-CH_2-R$, ou
b) $R_{39}$ et $R_{40}$ représentent chacun un reste de formule VII $-CH_2-R$, $R_{41}$ et $R_{42}$ représentent ensemble le reste $=N-R_{33}$, et $R_{43}$ représente cyclopentadiényle non substitué ou substitué, $R_{32}$-O- ou un atome d'halogène, ou
c) $R_{40}$, $R_{40}$ et $R_{40}$ un reste de formule VII $-CH_2-R$, $R_{42}$ et $R_{43}$ représentent ensemble le reste $=N-R_{33}$, ou

$R_{39}$, $R_{40}$, $R_{41}$ et $R_{42}$ représentent chacun un reste de formule VII $-CH_2-R$, et $R_{43}$ représente un cyclopentadiényle non substitué ou substitué, $R_{32}-O-$ ou un atome d'halogène,

R, $R_{32}$ et $R_{33}$ ayant les significations données dans la revendication 17.

**20.** Procédé selon la revendication 1, caractérisé en ce que l'on utilise des composés de niobium(V) et de tantale(V) de formules IX, IXa et IXb,

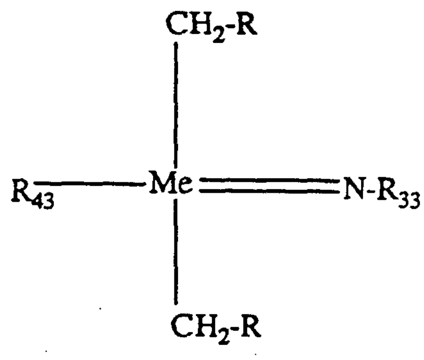

(IX),

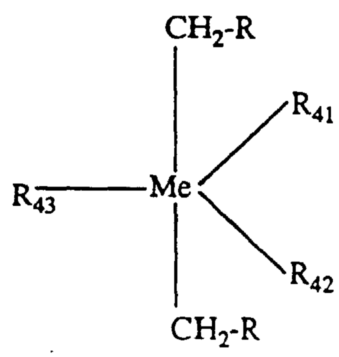

(IXa),

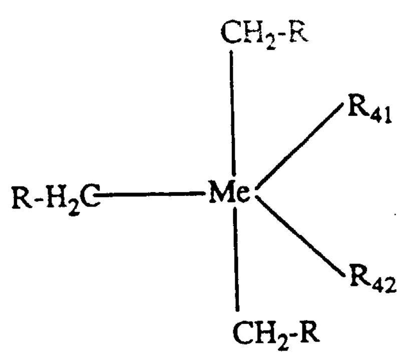

(IXb),

dans lesquelles

Me représente Nb(V) ou Ta(V) ;
R représente un atome d'hydrogène, $-C(CH_3)_3$, $-C(CH_3)_2C_6H_5$, $C_6H_5$ ou -Si(alkyle en $C_1$-$C_4$)$_3$ ;
$R_{33}$ représente un groupe phényle ou un groupe phényle substitué par 1 à 3 groupes alkyle en $C_1$-$C_4$, ou alkoxy en $C_1$-$C_4$,
$R_{43}$ dans la formule IX représente le groupe $CH_2$-R ou F, Cl, Br, un groupe alkoxy en $C_1$-$C_4$ linéaire

ou plus particulièrement ramifié, non substitué ou substitué par du fluor, un groupe phényloxy non substitué ou substitué par des groupes alkyle en $C_1$-$C_4$ ou alkoxy en $C_1$-$C_4$, ou cyclopentadiényle non substitué ou substitué par un groupe alkyle en $C_1$-$C_4$ ;

$R_{41}$, $R_{42}$ et $R_{43}$ dans la formule IXa, indépendamment l'un de l'autre, représentent F, Cl, Br, un groupe alkoxy en $C_1$-$C_4$ linéaire ou plus particulièrement ramifié, non substitué ou substitué par du fluor, un groupe phényloxy non substitué ou substitué par des groupes alkyle en $C_1$-$C_4$ ou alkoxy en $C_1$-$C_4$, ou cyclopentadiényle non substitué ou substitué par un groupe alkyle en $C_1$-$C_4$ ; et

$R_{41}$ et $R_{42}$ dans la formule IXb, indépendamment l'un de l'autre, représentent F, Cl, Br, un groupe alkoxy en $C_1$-$C_4$ linéaire ou plus particulièrement ramifié, non substitué ou substitué par du fluor, un groupe phényloxy non substitué ou substitué par des groupes alkyle en $C_1$-$C_4$ ou alkoxy en $C_1$-$C_4$, ou cyclopentadiényle non substitué ou substitué par un groupe alkyle en $C_1$-$C_4$.

**21.** Procédé selon la revendication 1, caractérisé en ce que les composés de niobium(V) et de tantale(V) répondent aux formules $Me[CH_2Si(CH_3)_3]_5$, $Cp_2Me[(CH_2C(CH_3)_2\text{-}C_6H_5)]_3$, $Me(=N\text{-}2,6\text{-diméthylC}_6H_3)(CH_3)_3$, $Me(=N\text{-}C_6H_5)[OC(CH_3)_3][(CH_2Si(CH_3)_3)]_2$, $Me(=N\text{-}2,6\text{-diisopropylC}_6H_3)[(CH_2\text{-}C_6H_5)]_3$, $Me(=N\text{-}C_6H_5)[OCCH_3(CF_3)_2][(CH_2Si(CH_3)_3)]_2$, $CpMe[CCCH_3(CF_3)_2]_2[(CH_2\text{-}C_6H_5)]_2$, $Me(=N\text{-}2,6\text{-diisopropylC}_6H_3)[(CH_2C(CH_3)_2\text{-}C_6H_5)]_2Cl$, $Cp_2Me(CH_3)_2[OCH(CH_3)_2]$, $Me(=N\text{-}2,6\text{-dimethylC}_6H_3)[(CH_2\text{-}C_6H_5)]_3$, $CpMe[OCH(CH_3)_2]_2[(CH_2Si(CH_3)_3)]_2$, $Cp_2Me[(CH_2\text{-}C_6H_5)]_3$, $Me[CH_2Si(CH_3)_3]_3Cl_2$, $Me[CH_2Si(CH_3)_3]_3[OCH_2C(CH_3)_3]_2$, $Cp_2Me[3,5\text{-diméthylC}_6H_3O)][(CH_2Si(CH_3)_3)]_2$, $Me(2,6\text{-Diisopropylphényloxy})_2(CH_3)_3$, $Cp_2Me(CH_3)_3$, $Me(2,6\text{-Diméthylphényloxy})_2(CH_3)_3$, $Me[CH_2Si(CH_3)_3]_3[OCH(CH_3)]_2$, $CpMe[OC(CH_3)_3]_2[(CH_2\text{-}C_6H_5)]_2$ ou $Cp_2Me[(CH_2Si(CH_3)_3)]_3$ où Cp signifie cyclopentadiényle et Me signifie Nb(V) ou Ta(V)).

**22.** Procédé de polymérisation induite par voie photocatalytique et de polymérisation thermique consécutive d'une oléfine cyclique ou d'au moins deux oléfines cycliques différentes, en présence d'un composé métallique en tant que catalyseur, caractérisé en ce que l'on met en oeuvre

(a) une polymérisation photochimique par métathèse décyclisante, où on irradie d'abord les cyclooléfines en présence d'une quantité catalytique d'au moins un composé stable à la chaleur de niobium(V) et de tantale(V), comportant au moins deux groupes méthyle ou deux groupes méthyle monosubstitués liés au métal, le substituant ne comportant pas d'atome d'hydrogène en position $\alpha$ ; ou on irradie éventuellement dans un solvant inerte une quantité catalytique d'un composé stable à la chaleur de niobium(V) et de tantale(V), comportant au moins deux groupes méthyle ou deux groupes méthyle monosubstitués liés au métal, le substituant ne comportant pas d'atome d'hydrogène en position $\alpha$ et enquite, on mélange avec au moins une cyclooléfine ;
b) on termine la polymérisation par réchauffage et sans irradiation.

**23.** Procédé selon la revendication 1, caractérisé en ce qu'on utilise les composés de titane(IV), de niobium(V), de tantale(V), de molybdène(VI) et de tungstène(VI) dans une quantité de 0,001 à 20 % en moles par rapport à la quantité de la cyclooléfine.

**24.** Composition contenant (a) une oléfine cyclique ou au moins deux oléfines cycliques différentes et (b) une quantité catalytique efficace d'au moins un composé thermostable de niobium(V) et de tantale(V), dans lequel un groupe silylméthyle et au moins un halogène sont liés au métal.

**25.** Matière de support revêtue caractérisée en ce que l'on dépose sur un support une couche constituée de (a) une oléfine cyclique ou au moins deux oléfines cycliques différentes et -(b) une quantité catalytique efficace d'au moins un composé thermostable de niobium(V) et de tantale(V), qui contient au moins deux groupes méthyle ou deux groupes méthyle monosubstitués liés au métal, le substituant ne comportant pas d'atomes d'hydrogène en position $\alpha$.

**26.** Procédé pour la préparation de matières revêtues ou de reproduction en relief sur des supports dans lequel on dépose une composition selon la revendication 24, on élimine éventuellement le solvant et on irradie la couche en vue de polymérisation et éventuellement on effectue un post-durcissement thermique, ou on irradie la couche à travers un photomasque, on effectue éventuellement un post-durcissement thermique et ensuite on élimine avec un solvant les portions non irradiées.